# EUROPEAN PATENT APPLICATION

(11) **EP 4 803 953 A1**
(43) Date of publication of application: **09.09.2026**
(21) Application number: 23957571.5
(22) Date of filing: 30.10.2023
(51) Int. Cl.: G02C 7/04

(54) **COMPOSITE MEMBRANE**

(71) Applicant: MENICON CO., LTD., Naka-ku Nagoya-shi, Aichi 460-0006 (JP)
(72) Inventor: SATAKE, Yurika, Kasugai-shi, Aichi 487-0032 (JP); NAKATSUJI, Shunya, Kasugai-shi, Aichi 487-0032 (JP)
(74) Representative: Plasseraud IP
(86) International application number: PCT/JP2023/039112
(87) International publication number: WO 2025/094241

(57) **Abstract**

The present invention provides a composite membrane excellent in interlayer adhesion. A composite membrane according to an embodiment of the present invention includes: a first polymer part including a first polymer; and a second polymer part, which is arranged in direct contact with at least part of the first polymer part and includes a second polymer. The first polymer and the second polymer each include a constituent unit derived from a siloxane monomer, provided that the second polymer (i) is free of a constituent unit derived from a siloxane monomer containing a nitrogen atom, or (ii) includes the constituent unit derived from the siloxane monomer containing a nitrogen atom. In the case (ii), the second polymer includes 4 wt% or more of a constituent unit derived from a monofunctional monomer, which has a molecular weight of 500 or less and is free of a nitrogen atom.

## Description

### Technical Field

The present invention relates to a composite membrane, and more specifically, to a composite membrane applicable to an ophthalmic device.

### Background Art

Contact lenses are generally classified roughly into a hard contact lens including a relatively hard material and a soft contact lens including a relatively soft material. In recent years, for the purpose of imparting desired properties to the contact lenses, a hybrid lens in which two or more kinds of materials are combined like the combination of, for example, a soft contact lens material and a hard contact lens material, or a soft contact lens material A and a soft contact lens material B has been studied (e.g., Patent Literature 1). In addition, research on a smart contact lens having mounted therein an electronic component has been advanced (e.g., Patent Literature 2).

### Citation List

### Patent Literature

[PTL 1] US 2007/0291224 A1
[PTL 2] JP 2016-46256 A

### Summary of Invention

### Technical Problem

In a contact lens having such a laminated structure as found in each of the hybrid lens and the smart contact lens, high adhesion between layers is required. Specifically, when delamination or the lifting of layers occurs during the use of the contact lens, there is a concern about foreign body sensation, irritation to an eye, and the clouding of the lens and the generation of bacteria due to the penetration of tear fluid into its inside. In addition, in the smart contact lens, there is a concern about, for example, electric shock or the leakage of a harmful substance due to the exposure of an electronic component.

A primary object of the present invention is to provide a composite membrane excellent in adhesion between dissimilar materials such as a composite membrane excellent in interlayer adhesion in two or more layers including different polymer materials.

### Solution to Problem

[1] According to one aspect of the present invention, there is provided a composite membrane, including: a first polymer part including a first polymer; and a second polymer part, which is arranged in direct contact with at least part of the first polymer part and includes a second polymer, wherein the first polymer and the second polymer each include a constituent unit derived from a siloxane monomer, provided that the second polymer (i) is free of a constituent unit derived from a siloxane monomer containing a nitrogen atom, or (ii) includes the constituent unit derived from the siloxane monomer containing a nitrogen atom, and wherein in the case (ii), the second polymer includes 4 wt% or more of a constituent unit derived from a monofunctional monomer, which has a molecular weight of 500 or less and is free of a nitrogen atom.
[2] In the composite membrane according to the above-mentioned item [1], the first polymer part may be a first polymer layer having a front-side surface and a back-side surface, and the second polymer part may be a second polymer layer arranged in direct contact with at least part of one surface of the first polymer layer.
[3] The composite membrane according to the above-mentioned item [2] may have a laminated structure in which two or more polymer layers are laminated.
[4] In the composite membrane according to the above-mentioned item [2] or [3], the second polymer layer may be arranged in direct contact with at least part of the back-side surface of the first polymer layer.
[5] The composite membrane according to any one of the above-mentioned items [2] to [4] may further include a third polymer layer, which is arranged in direct contact with at least part of a surface of the second polymer layer opposite to the first polymer layer and includes a third polymer, and the third polymer may include a constituent unit derived from a siloxane monomer.
[6] The composite membrane according to any one of the above-mentioned items [1] to [5] may have an oxygen permeability coefficient of 50 Barrer or more.
[7] The composite membrane according to any one of the above-mentioned items [1] to [6] may have a total light transmittance of 80% or more.
[8] In the composite membrane according to any one of the above-mentioned items [1] to [7], each of the polymer parts may have a water absorption of 3 wt% or less.
[9] In the composite membrane according to any one of the above-mentioned items [2] to [8], a Rockwell superficial hardness of at least one outermost layer of the composite membrane may be 20 or more.
[10] In the composite membrane according to any one of the above-mentioned items [1] to [9], the first polymer and/or the second polymer may include, as the constituent unit derived from the siloxane monomer, a constituent unit derived from a long-chain siloxane monomer having a siloxane bond with a number of repetitions of 3 or more.
[11] In the composite membrane according to the above-mentioned item [10], a total number of the siloxane bonds in the long-chain siloxane monomer may be 100 or less.
[12] In the composite membrane according to the above-mentioned item [10] or [11], the second polymer may include the constituent unit derived from the long-chain siloxane monomer.
[13] In the composite membrane according to any one of the above-mentioned items [1] to [12], the first polymer may include the constituent unit derived from the siloxane monomer at a content ratio of 80 wt% or less.
[14] In the composite membrane according to any one of the above-mentioned items [1] to [13], the first polymer may include, as the constituent unit derived from the siloxane monomer, a constituent unit derived from a siloxane-containing styrene derivative.
[15] The composite membrane according to any one of the above-mentioned items [1] to [14] may be an ophthalmic device.
[16] The composite membrane according to any one of the above-mentioned items [1] to [14] may be an intraocular lens.
[17] The composite membrane according to any one of the above-mentioned items [1] to [14] may be a contact lens.
[18] The composite membrane according to any one of the above-mentioned items [1] to [14] may be an orthokeratology lens.
[19] The composite membrane according to any one of the above-mentioned items [1] to [14] may be a hybrid lens including a hard contact lens part and a soft contact lens part.
[20] In the composite membrane according to the above-mentioned item [19], the first polymer part may be the hard contact lens part.
[21] The composite membrane according to any one of the above-mentioned items [1] to [20] may further include a functional element embedded therein.

### Advantageous Effects of Invention

According to the embodiment of the present invention, in the composite membrane including the first polymer part and the second polymer part each including the polymer obtained by using the siloxane monomer, the adhesion between the respective polymer parts can be improved when the second polymer part includes the polymer obtained without using the siloxane monomer containing a nitrogen atom, or the polymer obtained by using the siloxane monomer containing a nitrogen atom together with the predetermined monofunctional monomer blended at the predetermined content ratio.

### Brief Description of Drawings

FIG. **1(a)** is a schematic plan view of a composite membrane in one embodiment of the present invention, and FIG. 1(b) is a schematic cross-sectional view taken along the line A-A thereof.
FIG. **2(a)** is a schematic plan view of a composite membrane in one embodiment of the present invention, and FIG. **2(b)** is a schematic cross-sectional view taken along the line A-A thereof.
FIG. **3(a)** is a schematic plan view of a composite membrane in one embodiment of the present invention, and FIG. **3(b)** is a schematic cross-sectional view taken along the line A-A thereof.
FIG. **4(a)** is a schematic plan view of a composite membrane in one embodiment of the present invention, and FIG. **4(b)** is a schematic cross-sectional view taken along the line A-A thereof.
FIG. **5(a)** is a schematic plan view of a composite membrane in one embodiment of the present invention, and FIG. **5(b)** is a schematic cross-sectional view taken along the line A-A thereof.
FIGS. **6** are each a schematic view for describing an example of a method of producing the composite membrane according to the embodiment of the present invention.
FIGS. **7** are each a schematic view for describing an example of a method of producing the composite membrane according to the embodiment of the present invention.

### Description of Embodiments

Typical embodiments of the present invention are described below, but the present invention is not limited to these embodiments. The respective embodiments may be appropriately combined unless clearly inappropriate. For ease of viewing, the drawings are schematically illustrated, and the thickness and size of each component, and a mutual ratio between, for example, the thicknesses of the components in the drawings differ from actual ones.

As used herein, the term "monomer" means a polymerizable compound having one or more polymerizable groups. The polymerizable group may be preferably, for example, an ethylenically unsaturated group, and the polymerizable group may be, for example, a (meth)acryloyl group, a vinyl group, or an allyl group. Herein, the description "(meth)" means optional methyl substitution. Accordingly, the description "(meth)acryloyl" means methacryloyl and/or acryloyl. Other descriptions such as "(meth)acrylic" have similar meanings.

The phrase "a layer A is in direct contact with a layer B" as used herein means that the layer A and the layer B adhere to each other without a gap via no other layer such as an adhesion layer.

### A. Composite Membrane

A composite membrane according to an embodiment of the present invention includes: a first polymer part including a first polymer; and a second polymer part, which is arranged in direct contact with at least part of the first polymer part and includes a second polymer. Typically, the first polymer and the second polymer each include a constituent unit derived from a siloxane monomer, provided that the second polymer (i) is free of a constituent unit derived from a siloxane monomer containing a nitrogen atom, or (ii) includes the constituent unit derived from the siloxane monomer containing a nitrogen atom. In the case (ii), the second polymer includes 4 wt% or more of a constituent unit derived from a monofunctional monomer, which has a molecular weight of 500 or less and is free of a nitrogen atom. As described later, the composite membrane according to the embodiment of the present invention may be used as an ophthalmic lens typified by a contact lens. Accordingly, the composite membrane may have a hemispherical shape following a curve of a cornea. In addition, when the composite membrane is used as an ophthalmic lens, a side thereof in contact with an eye may be referred to as "back side," and a side opposite thereto may be referred to as "front side."

In one embodiment, the composite membrane may be a multilayer membrane including: a first polymer layer, which has a front-side surface and a back-side surface, and includes the first polymer; and a second polymer layer, which is arranged in direct contact with at least part of one surface of the first polymer layer and includes the second polymer.

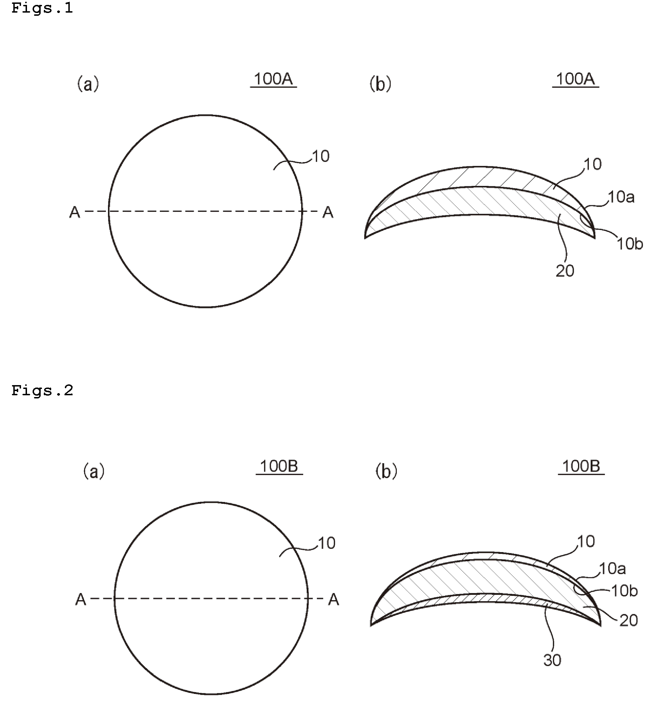

FIG. **1(a)** is a schematic plan view of a composite membrane (multilayer membrane) in one embodiment of the present invention, and FIG. **1(b)** is a schematic cross-sectional view taken along the line A-A thereof. FIG. **2(a)** is a schematic plan view of a composite membrane (multilayer membrane) in another embodiment of the present invention, and FIG. **2(b)** is a schematic cross-sectional view taken along the line A-A thereof.

A multilayer membrane **100A** illustrated in each of FIGS. **1** includes: a first polymer layer **10** having a front-side surface **10a** and a back-side surface **10b**; and a second polymer layer **20** arranged in direct contact with the back-side surface **10b** of the first polymer layer **10**. The size of the multilayer membrane **100A** may be appropriately set in accordance with its applications. The maximum diameter of the multilayer membrane **100A** is, for example, from 12.5 mm to 22 mm. The center thickness of the first polymer layer **10** may be, for example, from 0.05 mm to 0.2 mm, or for example, from 0.1 mm to 0.2 mm. The center thickness of the second polymer layer **20** may be, for example, from 0.5 mm to 1.2 mm, or for example, from 0.7 mm to 1.1 mm.

A multilayer membrane **100B** illustrated in each of FIGS. **2** includes: the first polymer layer **10** having the front-side surface **10a** and the back-side surface **10b**; the second polymer layer **20** arranged in direct contact with the back-side surface **10b** of the first polymer layer **10**; and a third polymer layer **30** arranged in direct contact with the back-side surface of the second polymer layer **20**. The maximum diameter of the multilayer membrane **100B** is, for example, from 12.5 mm to 22 mm. The center thickness of the first polymer layer **10** may be, for example, from 0.05 mm to 0.2 mm, or for example, from 0.1 mm to 0.2 mm. The center thickness of the second polymer layer **20** may be, for example, from 0.5 mm to 1.2 mm, or for example, from 0.7 mm to 1.1 mm. The center thickness of the third polymer layer **30** may be, for example, from 0.05 mm to 0.2 mm, or for example, from 0.1 mm to 0.2 mm.

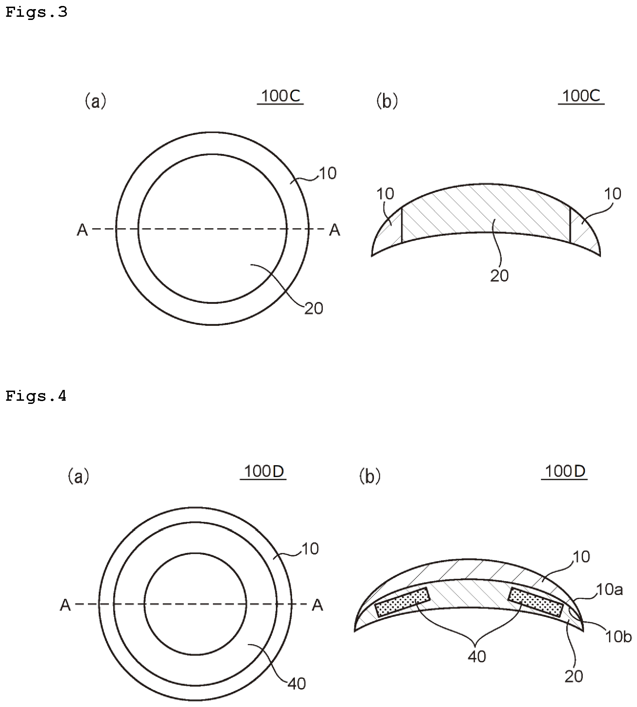

The structure of the composite membrane according to the embodiment of the present invention is not limited to the above-mentioned illustrated examples. The multilayer membrane may have, for example, a two-layer structure in which the second polymer layer is arranged in direct contact with at least part of the front-side surface of the first polymer layer, or may have, for example, a three-layer structure in which the second polymer layer is arranged in direct contact with at least part of one surface of the first polymer layer, and the third polymer layer is arranged in direct contact with at least part of the other surface thereof. The multilayer membrane may also include four or more polymer layers. In addition, the entire surface of each polymer layer is not required to be in contact with an adjacent layer, and at least part thereof only needs to be in contact therewith. For example, the multilayer membrane may have a configuration in which the first polymer layer is arranged in direct contact with the central region of the second polymer layer, and in the configuration illustrated in each of FIGS. 1, the diameter of the first polymer layer may be smaller than the diameter of the second polymer layer. Alternatively, the composite membrane may have a structure in which polymer parts each having a front-side surface and a back-side surface are arranged in a multiple circle shape in plan view. For example, a composite membrane **100C** illustrated in each of FIGS. **3** includes: the second polymer part **20** having a circular shape in plan view; and the first polymer part **10** arranged in direct contact with the second polymer part so as to surround the outer peripheral end surface thereof. Unlike the illustrated example, the following structure is also permitted: the second polymer part is arranged in direct contact with the first polymer part so as to surround the outer peripheral end surface thereof.

An embodiment in which the composite membrane is a multilayer membrane is specifically described below, but the following description may also be applied to a composite membrane having a structure other than the multilayer membrane unless explicitly inappropriate in context.

The above-mentioned multilayer membrane can have high oxygen permeability because both the first polymer and the second polymer each include the constituent unit derived from the siloxane monomer. The oxygen permeability coefficient (Dk value) of the multilayer membrane is, for example, 50 Barrer or more, preferably 100 Barrer or more, more preferably 150 Barrer or more. The multilayer membrane having the above-mentioned oxygen permeability coefficient can supply sufficient oxygen to a cornea when used as a contact lens. The upper limit of the oxygen permeability coefficient is not particularly limited, but may be, for example, 600 Barrer or less. The oxygen permeability coefficient may be determined by a method described in Examples. The unit "Barrer" of the oxygen permeability coefficient is "×10⁻¹¹ (cm²/sec) · (mLO₂/ (mL×mmHg))".

In one embodiment, the Rockwell superficial hardness of at least one outermost layer of the multilayer membrane is, for example, 20 or more, preferably 30 or more, more preferably 40 or more. A multilayer membrane in which the Rockwell superficial hardness of one outermost layer, preferably each of both outermost layers falls within the above-mentioned ranges has high mechanical stability and can be excellent in handleability. The upper limit of the above-mentioned Rockwell superficial hardness is not particularly limited, but may be, for example, 150 or less.

In one embodiment, the water absorption (water content) of each layer for forming the multilayer membrane (as a result, the water absorption of the multilayer membrane as a whole) is typically less than 10 wt%, for example, 3 wt% or less, preferably 2 wt% or less, more preferably 1 wt% or less, still more preferably 0.5 wt% or less. The lower limit of the water absorption is not particularly limited, and the water absorption may be, for example, 0.1 wt% or less. The water absorption may be determined by a method described in Examples.

The total light transmittance of the multilayer membrane is, for example, 80% or more, preferably 90% or more, more preferably 95% or more. When the total light transmittance of the multilayer membrane falls within the above-mentioned ranges, the membrane is suitable for ophthalmic device applications. The total light transmittance may be measured in accordance with JIS K 7361.

### <First Polymer Layer>

The first polymer layer includes the first polymer including the constituent unit derived from the siloxane monomer. The first polymer layer is substantially formed of the first polymer. Specifically, the content ratio of the first polymer in the first polymer layer in a state saturated with water is typically more than 90 wt%, for example, 95 wt% or more, and may be 97 wt% or more, or 98 wt% or more, and is, for example, 99.95 wt% or less, and may be 99.9 wt% or less.

The water absorption of the first polymer layer is typically less than 10 wt%, for example, 3 wt% or less, preferably 2 wt% or less, more preferably 1 wt% or less, still more preferably 0.5 wt% or less. The lower limit of the water absorption is not particularly limited, and the water absorption may be, for example, 0.1 wt% or less.

The first polymer includes the constituent unit derived from the siloxane monomer, and hence the first polymer layer can have high oxygen permeability. The oxygen permeability coefficient of the first polymer layer is, for example, 50 Barrer or more, preferably 100 Barrer or more, more preferably 150 Barrer or more. The multilayer membrane in which the first polymer layer has the above-mentioned oxygen permeability coefficient can supply sufficient oxygen to a cornea when used as a contact lens. The upper limit of the oxygen permeability coefficient is not particularly limited, but may be, for example, 600 Barrer or less.

The Rockwell superficial hardness of the first polymer layer is, for example, 20 or more, preferably 30 or more, more preferably 40 or more. When the Rockwell superficial hardness of the first polymer layer falls within the above-mentioned ranges, a multilayer membrane excellent in processability (e.g., lathability) and handleability can be obtained. In addition, the first polymer layer having such hardness can function as a hard contact lens layer. The upper limit of the above-mentioned Rockwell superficial hardness is not particularly limited, but may be, for example, 150 or less.

The tensile modulus of elasticity of the first polymer layer is, for example, 50 MPa or more, preferably 100 MPa or more, more preferably 200 MPa or more. When the tensile modulus of elasticity of the first polymer layer falls within the above-mentioned ranges, a multilayer membrane having high mechanical stability and excellent handleability can be obtained. In addition, the first polymer layer having such tensile modulus of elasticity can function as a hard contact lens layer. The upper limit of the above-mentioned tensile modulus of elasticity is not particularly limited, but may be, for example, 3,000 MPa or less, or for example, 2,000 MPa or less. The tensile modulus of elasticity may be calculated from a stress-elongation curve obtained by, for example, performing a tensile test at a tensile speed of 100 mm/min in physiological saline at 20°C through use of a dumbbell-shaped test sample having a stretched portion with a width of about 2 mm and a thickness of about 0.7 mm.

The total light transmittance of the first polymer layer is, for example, 80% or more, preferably 90% or more, more preferably 95% or more. When the total light transmittance of the first polymer layer falls within the above-mentioned ranges, a multilayer membrane having high transparency can be obtained.

In one embodiment, the surface of the first polymer layer on a side out of contact with the second polymer layer may be subjected to surface modification treatment, such as corona treatment or plasma treatment. When the surface is subjected to the surface modification treatment, its wettability is improved, and excellent wearing comfort well adapted to tear fluid can be achieved. The contact angle of the surface of the first polymer layer after the surface modification treatment is, for example, 90° or less, preferably 70° or less, more preferably from 0° to 50°.

The dynamic friction coefficient of the surface of the first polymer layer may be, for example, from 0.1 to 2.0, or for example, from 0.2 to 1.5. The multilayer membrane, in which the first polymer layer having the above-mentioned dynamic friction coefficient is arranged on the front-side surface of the second polymer layer that tends to have a high dynamic friction coefficient, can provide satisfactory wearing comfort because the membrane is reduced in friction with an eyelid when used as a contact lens.

The first polymer is obtained by polymerizing a polymerizable composition containing monomer components, and includes a constituent unit derived from each monomer in the monomer components. A polymer, which includes the constituent unit derived from the siloxane monomer and satisfies the above-mentioned characteristics, may be preferably used as the first polymer. In this description, the content ratio of the constituent unit derived from each monomer in the polymer is regarded as corresponding to the content ratio of the monomer in the monomer components.

As described above, the monomer components include the siloxane monomer. The siloxane monomer has one or more siloxane bonds (Si-O-Si) and polymerizable groups in a molecule thereof. Typically, the monomer components further include a monomer other than the siloxane monomer (in other words, a monomer having no siloxane bond in a molecule thereof). Examples of such monomer include: a copolymerizable monomer (monofunctional monomer), such as a hydrophobic monomer or a hydrophilic monomer; and a crosslinkable monomer (polyfunctional monomer). The monomer components may include the siloxane monomer, and one or more kinds of monomers selected from the copolymerizable monomer and the crosslinkable monomer. The total content ratio of the siloxane monomer, the hydrophobic monomer, the hydrophilic monomer, and the crosslinkable monomer in the monomer components may be, for example, from 95 wt% to 100 wt%, or for example, from 97 wt% to 99.9999 wt%. From the viewpoint of improving adhesion to the second polymer layer, the content ratio of a monomer containing a nitrogen atom in the monomer components is preferably 50 wt% or less, more preferably from 0 wt% to 40 wt%, still more preferably from 0 wt% to 20 wt%, and may be, for example, from 0 wt% to 10 wt%.

Any appropriate monomer may be used as the siloxane monomer as long as the monomer has a siloxane bond and a polymerizable group. The siloxane monomer can impart high oxygen permeability to a polymer material by virtue of the presence of the siloxane bond. In one embodiment, the siloxane monomer may be a non-crosslinkable siloxane monomer having a single polymerizable group (in other words, having only one polymerizable group in a molecule thereof). In another embodiment, the siloxane monomer may be a crosslinkable siloxane monomer having two or more polymerizable groups in a molecule thereof. From the viewpoint of interlayer adhesion, a siloxane monomer free of a nitrogen atom is preferably used. When a siloxane monomer containing a nitrogen atom is used, its content ratio is as described above. In the embodiment of the present invention, the siloxane monomers may be used alone or in combination thereof.

The number of the siloxane bonds included in the siloxane monomer is not limited as long as the effects of the present invention are obtained, and the number may be, for example, 1 or more, 2 or more, or 3 or more, and may be, for example, 100 or less, 80 or less, or 60 or less. The number of the siloxane bonds described above means not the number of repetitions of siloxane bonds in one chain of the monomer but the total number of all siloxane bonds in a molecule thereof. In this description, a siloxane monomer including siloxane bonds with a number of repetitions of 3 or more in one chain thereof may be referred to as "long-chain siloxane monomer" regardless of whether the chain is a main chain or a side chain. In addition, a monomer having an average molecular weight (Mw) of more than 1,000 may be referred to as "macromonomer". The average molecular weight (Mw) may be determined in terms of polystyrene by SEC measurement.

Examples of the siloxane monomer include monomers that have heretofore been used in ophthalmic device applications, such as siloxane monomers described in paragraph 0039 to paragraph 0044 of JP 2015-503631 A, siloxane monomers described in paragraph 0060 to paragraph 0065 of JP 2014-40598 A, and siloxane monomers described in paragraph 0024 to paragraph 0037 of WO 2015/92858 A1 (specifically, a siloxane monomer represented by the following formula (A), preferably the formula (A-1), (A-2), or (A-3)). Those publications are incorporated herein by reference in their entirety.
[Chem.1]

A¹-Z¹-U¹-Z²-Z³-(-S¹-U²-)ₙ-S²-Z⁴-Z⁵- U³-Z⁶-A² ... (A)

The symbols in the general formula (A) are described below.
1) "n" represents 0 or an integer of from 1 to 10.
2) A¹ and A² represent groups represented by the following general formulae (A-II) and (A-III), respectively. In the following general formula (A-II) and general formula (A-III), Y²¹ and Y²² each independently represent an acryloyloxy group, a methacryloyloxy group, a vinyl group, or an allyl group, and R²¹ and R²² each independently represent a direct bond or a linear or branched alkylene group having 2 to 6 carbon atoms.

   Y²¹-R²¹- ··· (A-II)

   -R²²-Y²² ··· (A-III)
3) Z¹, Z², Z³, Z⁴, Z⁵, and Z⁶ each independently represent a direct bond or a polyalkylene glycol chain containing an alkylene glycol (oxyalkylene group) as a repeating unit, provided that at least one of Z¹ to Z⁶ represents a polyethylene glycol chain in which the number of repetitions of ethylene glycol is 2 or more, preferably from 4 to 15, and at least one of Z¹ to Z⁶ not representing the polyethylene glycol chain represents a polyalkylene glycol chain containing an alkylene glycol other than ethylene glycol as a repeating unit (e.g., a polypropylene glycol chain containing propylene glycol as a constituent unit, a specific example of which is a polypropylene glycol chain in which the number of repetitions of propylene glycol is from 5 to 16).
4) U¹ represents a group represented by the following general formula (A-IV), and contains a urethane bond in the molecular chain of the siloxane monomer. In the following general formula (A-IV), E²¹ represents an -NHCO- group (in this case, E²¹ forms a urethane bond with X²¹) or a divalent group derived from a diisocyanate selected from the group consisting of saturated or unsaturated aliphatic, alicyclic, and aromatic diisocyanates (in this case, E²¹ forms a urethane bond between Z¹ and X²¹), and X²¹ represents an oxygen atom.

   -E²¹-X²¹- ... (A-IV)
5) U² represents a group represented by the following general formula (A-VI), and contains a urethane bond in the molecular chain of the siloxane monomer. In the following general formula (A-VI), R⁴¹ and R⁴² each independently represent a linear or branched alkylene group having 2 to 6 carbon atoms, X⁴¹ and X⁴² each independently represent an oxygen atom or an alkylene glycol group, and E⁴¹ represents a divalent group derived from a diisocyanate selected from the group consisting of saturated or unsaturated aliphatic, alicyclic, and aromatic diisocyanates (in this case, E⁴¹ forms a urethane bond between X⁴¹ and X⁴²).

   -R⁴¹-X⁴¹-E⁴¹-X⁴²-R⁴²- ··· (A-VI)
6) U³ represents a group represented by the following general formula (A-VII), and contains a urethane bond in the molecular chain of the siloxane monomer. In the following general formula (A-VII), X²² represents an oxygen atom, and E²² represents an -NHCO- group (in this case, E²² forms a urethane bond between itself and X²²) or a divalent group derived from a diisocyanate selected from the group consisting of saturated or unsaturated aliphatic, alicyclic, and aromatic diisocyanates (in this case, E²² forms a urethane bond between Z⁵ and X²²).

   -X²²-E²²- ··· (A-VII)
7) S¹ and S² each independently represent a group represented by the following general formula (A-V). In the following general formula (A-V), R³¹ and R³⁸ each independently represent a linear or branched alkylene group having 2 to 6 carbon atoms, and R³², R³³, R³⁴, R³⁵, R³⁶, and R³⁷ each independently represent an alkyl group having 1 to 6 carbon atoms, an alkyl group substituted with fluorine, or a phenyl group. In addition, K represents an integer of from 1 to 1,500, L represents 0 or an integer of from 1 to 1,500, and the sum of K and L: "K+L" is, for example, an integer of from 1 to 1,500, preferably an integer of from 2 to 1,000, more preferably an integer of from 3 to 500. 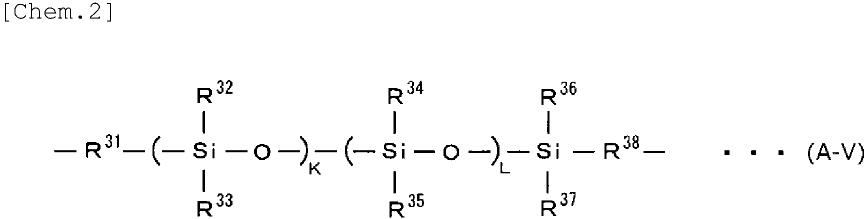 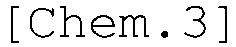 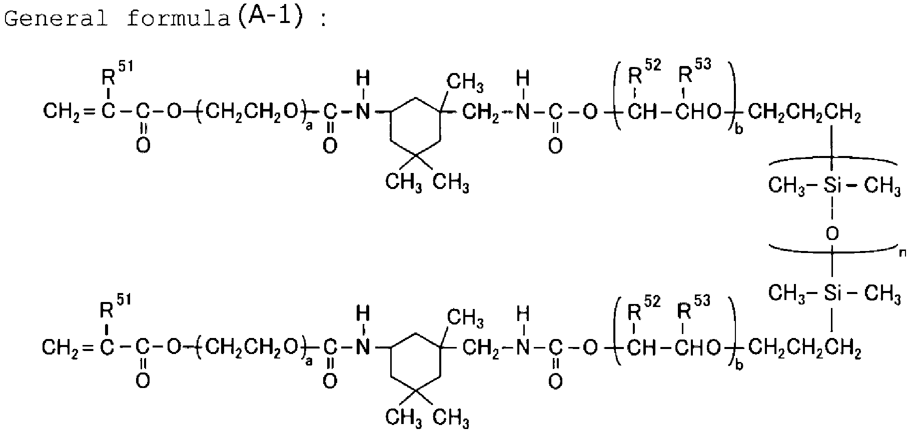
In the formula, R⁵¹ represents a hydrogen atom or a methyl group, "a" represents an integer of 2 or more, "b" represents an integer of 2 or more, and "n" represents an integer of from 1 to 1,500. In addition, R⁵² and R⁵³ each represent a hydrogen atom or a methyl group. When R⁵² represents a hydrogen atom, R⁵³ represents a methyl group, and when R⁵² represents a methyl group, R⁵³ represents a hydrogen atom. 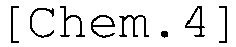 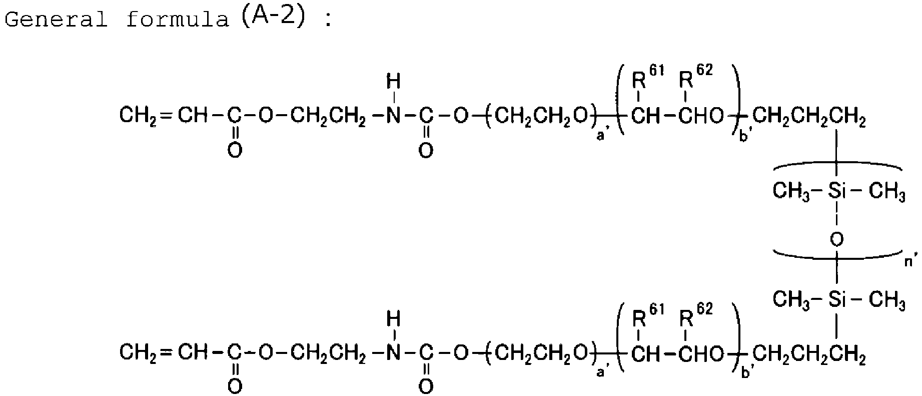 In the formula, a' represents an integer of 2 or more, b' represents an integer of 2 or more, and n' represents an integer of from 1 to 1,500. In addition, R⁶¹ and R⁶² each represent a hydrogen atom or a methyl group. When R⁶¹ represents a hydrogen atom, R⁶² represents a methyl group, and when R⁶¹ represents a methyl group, R⁶² represents a hydrogen atom. 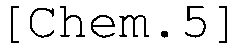 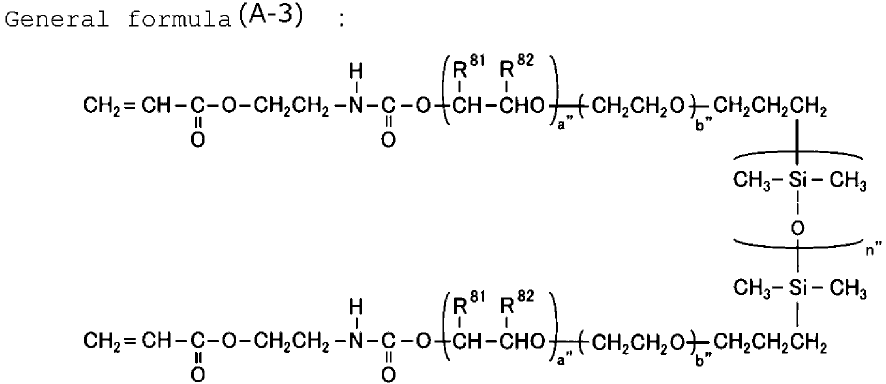 In the formula, a" represents an integer of 2 or more, b" represents an integer of 2 or more, and n" represents an integer of from 1 to 1,500. In addition, R⁸¹ and R⁸² each represent a hydrogen atom or a methyl group. When R⁸¹ represents a hydrogen atom, R⁸² represents a methyl group, and when R⁸¹ represents a methyl group, R⁸² represents a hydrogen atom.

Other specific examples of the siloxane monomer include: siloxane-containing alkyl (meth)acrylates, such as trimethylsiloxydimethylsilylmethyl (meth)acrylate, trimethylsiloxydimethylsilylpropyl (meth)acrylate, methylbis(trimethylsiloxy)silylpropyl (meth)acrylate, tris(trimethylsiloxy)silylpropyl (meth)acrylate, mono[methylbis(trimethylsiloxy)siloxy]bis(trimethylsiloxy)sily lpropyl (meth)acrylate, tris[methylbis (trimethylsiloxy)siloxy]silylpropyl (meth)acrylate, methylbis(trimethylsiloxy)silylpropylglyceryl (meth)acrylate, tris(trimethylsiloxy)silylpropylglyceryl (meth)acrylate, mono[methylbis(trimethylsiloxy)siloxy]bis(trimethylsiloxy)sily lpropylglyceryl (meth)acrylate, trimethylsilylethyltetramethyldisiloxypropylglyceryl (meth)acrylate, trimethylsilylmethyl (meth)acrylate, trimethylsilylpropylglyceryl (meth)acrylate, trimethylsilylpropyl (meth)acrylate, trimethylsiloxydimethylsilylpropylglyceryl (meth)acrylate, methylbis(trimethylsiloxy)silylethyltetramethyldisiloxymethyl (meth)acrylate, tetramethyltriisopropylcyclotetrasiloxanylpropyl (meth)acrylate, and tetramethyltriisopropylcyclotetrasiloxybis(trimethylsiloxy)sil ylpropyl (meth)acrylate; siloxane-containing styrene derivatives, such as tris(trimethylsiloxy)silylstyrene, bis(trimethylsiloxy)methylsilylstyrene, (trimethylsiloxy)dimethylsilylstyrene, tris(trimethylsiloxy)siloxydimethylsilylstyrene, [bis(trimethylsiloxy)methylsiloxy]dimethylsilylstyrene, (trimethylsiloxy)dimethylsilylstyrene, heptamethyltrisiloxanylstyrene, nonamethyltetrasiloxanylstyrene, pentadecamethylheptasiloxanylstyrene, heneicosamethyldecasiloxanylstyrene, heptacosamethyltridecasiloxanylstyrene, hentriacontamethylpentadecasiloxanylstyrene, trimethylsiloxypentamethyldisiloxymethylsilylstyrene, tris(pentamethyldisiloxy)silylstyrene, tris(trimethylsiloxy)siloxybis(trimethylsiloxy)silylstyrene, bis(heptamethyltrisiloxy)methylsilylstyrene, tris[methylbis(trimethylsiloxy)siloxy]silylstyrene, heptakis(trimethylsiloxy)trisilylstyrene, trimethylsiloxybis[tris(trimethylsiloxy)siloxy]silylstyrene, nonamethyltetrasiloxyundecylmethylpentasiloxymethylsilylstyren e, tris[tris(trimethylsiloxy)siloxy]silylstyrene, (tristrimethylsiloxyhexamethyl)tetrasiloxy[tris(trimethylsilox y)siloxy]trimethylsiloxysilylstyrene, nonakis(trimethylsiloxy)tetrasilylstyrene, bis(tridecamethylhexasiloxy)methylsilylstyrene, heptamethylcyclotetrasiloxanylstyrene, heptamethylcyclotetrasiloxybis(trimethylsiloxy)silylstyrene, tripropyltetramethylcyclotetrasiloxanylstyrene, and trimethylsilylstyrene; and siloxane-containing fumaric acid diesters, such as bis(3-(trimethylsilyl)propyl) fumarate, bis(3-(pentamethyldisiloxanyl)propyl) fumarate, and bis(tris(trimethylsiloxy)silylpropyl) fumarate. Of those, a siloxane-containing styrene derivative may be preferably used because both high oxygen permeability and hardness are easily achieved.

Still other specific examples of the siloxane monomer include mono(meth)acryloyloxypropyl-terminated mono-n-butyl-terminated polydimethylsiloxane, mono(meth)acryloyloxypropyl-terminated mono-n-methyl-terminated polydimethylsiloxane, mono(meth)acryloyloxypropyl-terminated mono-n-butyl-terminated polydiethylsiloxane, mono(meth)acryloyloxypropyl-terminated mono-n-methyl-terminated polydiethylsiloxane, mono(meth)acryloylaminopropyl-terminated mono-n-butyl-terminated polydimethylsiloxane, mono(meth)acryloylaminopropyl-terminated mono-n-methyl-terminated polydimethylsiloxane, mono(meth)acryloylaminopropyl-terminated mono-n-butyl-terminated polydiethylsiloxane, and mono(meth)acryloylaminopropyl-terminated mono-n-methyl-terminated polydiethylsiloxane. In those siloxane monomers, the number of repetitions of (Si-O) may be, for example, from 4 to 20, preferably from 4 to 12, more preferably from 4 to 10.

The content ratio of the siloxane monomer in the monomer components (in other words, the content ratio of the constituent unit derived from the siloxane monomer in the first polymer) is, for example, 10 wt% or more, preferably 20 wt% or more, more preferably 30 wt% or more, and is, for example, 80 wt% or less, preferably 70 wt% or less, more preferably 60 wt% or less. When the content ratio of the siloxane monomer falls within the above-mentioned ranges, a multilayer membrane excellent in oxygen permeability can be obtained.

Examples of the hydrophobic monomer include an alkyl (meth)acrylate, a fluorine-containing alkyl (meth)acrylate, an aromatic ring-containing (meth)acrylate, and a styrene-based monomer. The hydrophobic monomers may be used alone or in combination thereof. The solubility of the hydrophobic monomer in water at 25°C may be, for example, less than 0.03 g/mL.

The alkyl (meth)acrylate may be preferably, for example, an alkyl (meth)acrylate having an alkyl group having 1 to 20 carbon atoms. Specific examples thereof include linear, branched, or cyclic alkyl (meth)acrylates, such as methyl (meth)acrylate, ethyl (meth)acrylate, propyl (meth)acrylate, butyl (meth)acrylate, pentyl (meth)acrylate, hexyl (meth)acrylate, heptyl (meth)acrylate, nonyl (meth)acrylate, stearyl (meth)acrylate, octyl (meth)acrylate, decyl (meth)acrylate, lauryl (meth)acrylate, pentadecyl (meth)acrylate, 2-ethylhexyl (meth)acrylate, cyclopentyl (meth)acrylate, and cyclohexyl (meth)acrylate. Of those, an alkyl (meth)acrylate having an alkyl group having 1 to 5 carbon atoms is preferred. Methyl acrylate has a solubility in water at 25°C of more than 0.03 g/mL, but is treated as a hydrophobic monomer in this description because methyl acrylate has no polar group.

Examples of the fluorine-containing alkyl (meth)acrylate include alkyl (meth)acrylates obtained by introducing fluorine into the alkyl groups of the above-mentioned alkyl (meth)acrylates. Specific examples thereof include 2,2,2-trifluoroethyl (meth)acrylate, 2,2,3,3-tetrafluoropropyl (meth)acrylate, 2,2,3,3-tetrafluoro-t-pentyl (meth)acrylate, 2,2,3,4,4,4-hexafluorobutyl (meth)acrylate, 2,2,3,4,4,4-hexafluoro-t-hexyl (meth)acrylate, 2,3,4,5,5,5-hexafluoro-2,4-bis(trifluoromethyl)pentyl (meth)acrylate, 2,2,3,3,4,4-hexafluorobutyl (meth)acrylate, 2,2,2,2',2',2'-hexafluoroisopropyl (meth)acrylate, 2,2,3,3,4,4,4-heptafluorobutyl (meth)acrylate, and 2,2,3,3,4,4,5,5-octafluoropentyl (meth)acrylate. Of those, a fluorine-containing alkyl (meth)acrylate having a large fluorine moiety is preferred from the viewpoint of obtaining a multilayer membrane having more excellent oxygen permeability and having an antifouling property. Specifically, for example, (perfluorohexyl)ethyl (meth)acrylate, (perfluorooctyl)ethyl (meth)acrylate, or (perfluorodecyl)ethyl (meth)acrylate is preferred, and (perfluorooctyl)ethyl (meth)acrylate is more preferred from the viewpoints of availability and ease of purification.

Examples of the aromatic ring-containing (meth)acrylate include phenoxyethyl (meth)acrylate, phenylethyl (meth)acrylate, benzyl (meth)acrylate, phenyl (meth)acrylate, and pentabromophenyl (meth)acrylate.

Examples of the styrene-based monomer include styrene, α-methylstyrene, methylstyrene, ethylstyrene, acetoxystyrene, methoxystyrene, ethoxystyrene, propioxystyrene, and butoxystyrene.

The content ratio of the hydrophobic monomer in the monomer components (in other words, the content ratio of a constituent unit derived from the hydrophobic monomer in the first polymer) is, for example, from 5 wt% to 90 wt%, preferably from 10 wt% to 80 wt%, more preferably from 10 wt% to 70 wt%. The use of the hydrophobic monomer at the above-mentioned content ratios facilitates the adjustment of the characteristics (e.g., water absorption) of the first polymer.

Examples of the hydrophilic monomer include polar group-containing monomers, such as a hydroxyl group-containing monomer, a carboxyl group-containing monomer, a nitrogen atom-containing monomer, and an alkoxyl group-containing monomer. The hydrophilic monomers may be used alone or in combination thereof. The solubility of the hydrophilic monomer in water at 25°C may be, for example, 0.03 g/mL or more.

The hydroxyl group-containing monomer is preferably, for example, a hydroxyl group-containing alkyl (meth)acrylate. Specific examples thereof include hydroxyl group-containing alkyl (meth)acrylates each having an alkyl group having 1 to 4 carbon atoms, such as hydroxymethyl (meth)acrylate, hydroxyethyl (meth)acrylate, hydroxypropyl (meth)acrylate, hydroxybutyl (meth)acrylate, dihydroxyethyl (meth)acrylate, dihydroxypropyl (meth)acrylate, and dihydroxybutyl (meth)acrylate.

Examples of the carboxyl group-containing monomer include (meth)acrylic acid, itaconic acid, maleic acid, fumaric acid, and crotonic acid, and acid anhydrides thereof may also be preferably used.

Examples of the nitrogen atom-containing monomer include: (meth)acrylamides, such as N,N-dimethyl(meth)acrylamide, N-ethyl(meth)acrylamide, N-2-hydroxyethyl(meth)acrylamide, and N-isopropyl(meth)acrylamide; N-vinyllactams, such as N-vinylpyrrolidone, N-vinylpiperidone, and N-vinylcaprolactam; N-methyllactams such as 1-methyl-3-methylene-2-pyrrolidinone; (meth)acrylonitrile; and N-(meth)acryloylmorpholine.

The alkoxyl group-containing monomer is preferably, for example, an alkoxyalkyl (meth)acrylate. Specific examples thereof include alkoxyalkyl (meth)acrylates each having an alkoxyalkyl group having 2 to 4 carbon atoms, such as methoxymethyl (meth)acrylate, methoxyethyl (meth)acrylate, ethoxymethyl (meth)acrylate, and ethoxyethyl (meth)acrylate.

The content ratio of the hydrophilic monomer in the monomer components (in other words, the content ratio of a constituent unit derived from the hydrophilic monomer in the first polymer) is, for example, 80 wt% or less, preferably from 0 wt% to 70 wt%, more preferably from 0 wt% to 60 wt% (e.g., from 0 wt% to 20 wt%, from 0 wt% to 10 wt%, or from 0 wt% to 5 wt%). When the content ratio of the hydrophilic monomer falls within the above-mentioned ranges, a polymer having a desired degree of hydrophilicity can be suitably obtained.

The crosslinkable monomer contains two or more polymerizable functional groups (excluding those corresponding to the siloxane monomer). The use of the crosslinkable monomer can suitably provide a multilayer membrane having desired flexibility and mechanical strength. The crosslinkable monomers may be used alone or in combination thereof.

Specific examples of the crosslinkable monomer include butanediol di(meth)acrylate, ethylene glycol di(meth)acrylate, diethylene glycol di(meth)acrylate, triethylene glycol di(meth)acrylate, propylene glycol di(meth)acrylate, dipropylene glycol di(meth)acrylate, diallyl fumarate, allyl (meth)acrylate, vinyl (meth)acrylate, trimethylolpropane tri(meth)acrylate, methacryloyloxyethyl (meth)acrylate, divinylbenzene, diallyl phthalate, diallyl adipate, triallyl diisocyanate, α-methylene-N-vinylpyrrolidone, 4-vinylbenzyl (meth)acrylate, 3-vinylbenzyl (meth)acrylate, 2,2-bis((meth)acryloyloxyphenyl)hexafluoropropane, 2,2-bis((meth)acryloyloxyphenyl)propane, 1,4-bis(2-(meth)acryloyloxyhexafluoroisopropyl)benzene, 1,3-bis(2-(meth)acryloyloxyhexafluoroisopropyl)benzene, 1,2-bis(2-(meth)acryloyloxyhexafluoroisopropyl)benzene, 1,4-bis(2-(meth)acryloyloxyisopropyl)benzene, 1,3-bis(2-(meth)acryloyloxyisopropyl)benzene, and 1,2-bis(2-(meth)acryloyloxyisopropyl)benzene. Of those, butanediol di(meth)acrylate and ethylene glycol di(meth)acrylate may each be preferably used because each of the di(meth)acrylates is excellent in copolymerizability, and can easily adjust the flexibility and mechanical strength of the first polymer.

The content ratio of the crosslinkable monomer in the monomer components (in other words, the content ratio of a constituent unit derived from the crosslinkable monomer in the first polymer) is, for example, from 0 wt% to 25 wt%, preferably from 0.1 wt% to 20 wt%, more preferably from 0.5 wt% to 15 wt%, and may be, for example, from 5 wt% to 15 wt%, or for example, from 10 wt% to 15 wt%. When the content ratio of the crosslinkable monomer falls within the above-mentioned ranges, the flexibility and mechanical strength of the first polymer can be suitably adjusted.

The monomer components may further include a functional monomer. Examples of the functional monomer include a polymerizable UV absorber, a polymerizable dye, and a polymerizable UV absorbing dye. For specific examples thereof, reference may be made to [0087] to [0089] of WO 2022/044117 A1. In addition, various functional monomers are commercially available, and the functional monomer may be appropriately selected from these monomers in accordance with purposes. The functional monomer is a monomer that imparts a predetermined function to a polymer to be obtained, and the monomer is not included in the hydrophobic monomer, the hydrophilic monomer, and the crosslinkable monomer described above.

The total content ratio of the functional monomer in the monomer components (in other words, the total content ratio of a constituent unit derived from the functional monomer in the first polymer) is, for example, 5 wt% or less, preferably from 0.0001 wt% to 5 wt%, more preferably from 0.05 wt% to 3 wt%.

The first polymer layer may further include any appropriate additive as required. An additive that has heretofore been used in ophthalmic device applications may be used as the additive. Examples thereof include a cooling agent, a thickener, a surfactant, a non-polymerizable dye, and a non-polymerizable UV absorber.

The blending amount of the above-mentioned additive in the first polymer layer may be set to, for example, from 0.01 part by weight to 5 parts by weight, preferably from 0.01 part by weight to 3 parts by weight with respect to 100 parts by weight of the first polymer.

Details of the polymerizable composition and a polymerization method therefor are described in detail in Section C.

### <Second Polymer Layer>

The second polymer layer includes the second polymer including the constituent unit derived from the siloxane monomer. The second polymer layer is substantially formed of the second polymer. Specifically, the content ratio of the second polymer in the second polymer layer in a state saturated with water is typically more than 90 wt%, for example, 95 wt% or more, and may be 97 wt% or more, or 98 wt% or more, and is, for example, 99.95 wt% or less, and may be 99.9 wt% or less.

The water absorption of the second polymer layer is, for example, less than 10 wt%, preferably 5 wt% or less, more preferably 3 wt% or less, still more preferably 2 wt% or less. The lower limit of the water absorption is not particularly limited, and the water absorption may be, for example, 0.1 wt% or less.

The second polymer includes the constituent unit derived from the siloxane monomer, and hence the second polymer layer can have high oxygen permeability. The oxygen permeability coefficient of the second polymer layer is, for example, 200 Barrer or more, preferably 300 Barrer or more, more preferably 400 Barrer or more. The multilayer membrane in which the second polymer layer has the above-mentioned oxygen permeability coefficient can provide excellent wearing comfort because the membrane is reduced in burden on an eye when used as a contact lens. The upper limit of the oxygen permeability coefficient is not particularly limited, but may be, for example, 1,000 Barrer or less.

In one embodiment, a difference between the oxygen permeability coefficient of the first polymer layer and the oxygen permeability coefficient of the second polymer layer (Dk value of second polymer layer-Dk value of first polymer layer) is, for example, 40 Barrer or more, and may be from 50 Barrer to 1,000 Barrer. The second polymer layer has extremely high oxygen permeability, and hence even when the second polymer layer has such a thickness as to be capable of encapsulating a functional element, the entirety of the multilayer membrane can maintain practical oxygen permeability.

The tensile modulus of elasticity of the second polymer layer is, for example, 1,000 MPa or less, preferably 500 MPa or less, more preferably 400 MPa or less. When the tensile modulus of elasticity of the second polymer layer falls within the above-mentioned ranges, a multilayer membrane excellent in wearing comfort when used as an ophthalmic lens can be obtained. In addition, the second polymer layer having such tensile modulus of elasticity can function as a soft contact lens layer. The lower limit of the tensile modulus of elasticity is not particularly limited, but may be, for example, 0.05 MPa or more, or for example, 0.1 MPa or more. In one embodiment, the tensile modulus of elasticity of the second polymer layer is lower than the tensile modulus of elasticity of the first polymer layer. The tensile modulus of elasticity may be calculated from a stress-elongation curve obtained by, for example, performing a tensile test at a tensile speed of from 2 mm/min to 100 mm/min in physiological saline at 20°C or under room temperature through use of a dumbbell-shaped test sample (e.g., a dumbbell shape having a stretched portion with a width of about 2 mm and a thickness of about 0.75 mm).

The total light transmittance of the second polymer layer is, for example, 80% or more, preferably 90% or more, more preferably 95% or more. When the above-mentioned total light transmittance of the second polymer layer falls within the above-mentioned ranges, a multilayer membrane having high transparency can be obtained.

The contact angle of the surface of the second polymer layer opposite to a side in contact with the first polymer layer is, for example, from 60° to 130°, preferably from 70° to 120°, more preferably from 80° to 110°. In addition, a difference between the contact angle of the surface of the first polymer layer on a side in contact with the second polymer layer and the contact angle of the surface of the second polymer layer opposite to the side in contact with the first polymer layer (the latter-the former) is, for example, 30° or more, and may be 40° or more, 50° or more, or 60° or more.

The dynamic friction coefficient of the surface of the second polymer layer is, for example, from 0.2 to 20, or for example, from 1.0 to 15. The multilayer membrane, in which the first polymer layer having a lower dynamic friction coefficient is arranged on the front-side surface of the second polymer layer having the above-mentioned dynamic friction coefficient, can provide satisfactory wearing comfort because the membrane is reduced in friction with an eyelid when used as a contact lens.

A polymer, which includes the constituent unit derived from the siloxane monomer and satisfies the above-mentioned characteristics, may be preferably used as the second polymer. The second polymer is obtained by polymerizing a polymerizable composition containing monomer components, and includes a constituent unit derived from each monomer in the monomer components. Typically, the first polymer and the second polymer are different polymer materials, and the kinds and/or content ratios of their constituent units are different.

In one embodiment, the second polymer is free of a constituent unit derived from a siloxane monomer containing a nitrogen atom. In another embodiment, the second polymer includes the constituent unit derived from the siloxane monomer containing a nitrogen atom, and further includes the constituent unit derived from the monofunctional monomer, which has a molecular weight of 500 or less and is free of a nitrogen atom at a content ratio of 4 wt% or more.

The monomer components include a siloxane monomer. The monomer components may further include a copolymerizable monomer (e.g., a hydrophobic monomer or a hydrophilic monomer), a crosslinkable monomer, or the like as required. The monomer components may include the siloxane monomer, and one or more kinds of monomers selected from the copolymerizable monomer and the crosslinkable monomer. The total content ratio of the siloxane monomer, the hydrophobic monomer, the hydrophilic monomer, and the crosslinkable monomer in the monomer components may be, for example, from 95 wt% to 100 wt%, or for example, from 97 wt% to 99.9999 wt%.

Examples of the siloxane monomer may similarly include those described above as the examples of the siloxane monomer that can form the first polymer.

In one embodiment, the siloxane monomer includes a long-chain siloxane monomer. The long-chain siloxane monomer is preferably, for example, the following monomer: the number of repetitions of siloxane bonds in one chain of the monomer is 3 or more, preferably 4 or more; and the total number of the siloxane bonds in a molecule thereof is, for example, 100 or less, preferably 80 or less. When such long-chain siloxane monomer is used in combination with the low-molecular weight monofunctional monomer free of a nitrogen atom, the effects of the present invention can be suitably obtained. The above-mentioned long-chain siloxane monomer may be a macromonomer having an average molecular weight (Mw) of more than 1,000, for example, 2,000 or more.

The siloxane monomers may be used alone or in combination thereof. For example, one or two or more kinds of long-chain siloxane monomers (that may be macromonomers) and one or two or more kinds of siloxane monomers other than the long-chain siloxane monomers may be used in combination. When two or more kinds of siloxane monomers are used in combination, their weighted average molecular weight may be 500 or more.

The content ratio of the siloxane monomer in the monomer components is, for example, 70 wt% or more, preferably 80 wt% or more, more preferably 85 wt% or more, still more preferably 90 wt% or more. In addition, when the siloxane monomer includes the long-chain siloxane monomer, the content ratio of the long-chain siloxane monomer in the monomer components is, for example, 20 wt% or more, preferably 30 wt% or more, more preferably 40 wt% or more, and may be, for example, 80 wt% or more, 85 wt% or more, or 90 wt% or more. When the siloxane monomer does not include the siloxane monomer containing a nitrogen atom, the upper limit of the content ratio of the siloxane monomer in the monomer components is, for example, 99 wt% or less, and may be set to 98 wt% or less, or 95 wt% or less. Meanwhile, when the siloxane monomer includes the siloxane monomer containing a nitrogen atom, the upper limit of the content ratio of the siloxane monomer is, for example, 96 wt% or less, and may be set to 94 wt% or less, or 90 wt% or less. When the content ratio of the siloxane monomer falls within the above-mentioned ranges, a multilayer membrane excellent in oxygen permeability can be obtained. In addition, when the content ratio of the long-chain siloxane monomer falls within the above-mentioned ranges, a multilayer membrane having high oxygen permeability and flexibility can be obtained.

Examples of the hydrophobic monomer may similarly include those described above as the examples of the hydrophobic monomer that can form the first polymer. The hydrophobic monomers may be used alone or in combination thereof.

The content ratio of the hydrophobic monomer in the monomer components is, for example, 90 wt% or less, preferably from 0 wt% to 80 wt%, more preferably from 0 wt% to 70 wt% (e.g., from 0 wt% to 20 wt%, from 0 wt% to 10 wt%, or from 0 wt% to 5 wt%). The use of the hydrophobic monomer at the above-mentioned content ratios facilitates the adjustment of the characteristics (e.g., water absorption) of the second polymer.

Examples of the hydrophilic monomer may similarly include those described above as the examples of the hydrophilic monomer that can form the first polymer. The hydrophilic monomers may be used alone or in combination thereof.

The content ratio of the hydrophilic monomer in the monomer components is, for example, 80 wt% or less, preferably from 0 wt% to 70 wt%, more preferably from 0 wt% to 60 wt% (e.g., from 0 wt% to 20 wt%, from 0 wt% to 10 wt%, or from 0 wt% to 5 wt%). When the content ratio of the hydrophilic monomer falls within the above-mentioned ranges, a polymer having a desired degree of hydrophilicity can be suitably obtained.

Examples of the crosslinkable monomer may similarly include those described above as the examples of the crosslinkable monomer that can form the first polymer. The crosslinkable monomers may be used alone or in combination thereof.

The content ratio of the crosslinkable monomer in the monomer components is, for example, from 0 wt% to 25 wt%, preferably from 0.1 wt% to 20 wt%, more preferably from 0.5 wt% to 15 wt%. When the content ratio of the crosslinkable monomer falls within the above-mentioned ranges, the flexibility and mechanical strength of the second polymer can be suitably adjusted.

The monomer components may further include a functional monomer. Specific examples of the functional monomer and the content ratio thereof are as described for the first polymer.

In the embodiment of the present invention, when the monomer components for forming the second polymer include the siloxane monomer containing a nitrogen atom (e.g., a long-chain siloxane monomer containing a nitrogen atom), the monomer components further include the monofunctional monomer, which has a molecular weight of 500 or less and is free of a nitrogen atom. When the second polymer layer is formed by using the siloxane monomer containing a nitrogen atom, adhesion to the first polymer layer may become insufficient. However, when the monomer is used in combination with the monofunctional monomer, which has a low molecular weight and is free of a nitrogen atom, high interlayer adhesion can be secured. The reason why such effect is obtained is not certain, but is presumed, for example, as described below.

The siloxane monomer containing a nitrogen atom has a role as a hydrogen bond acceptor, and hence generally has a degree of hydrophilicity higher than that of a siloxane monomer free of a nitrogen atom. Accordingly, in the case where the siloxane monomer containing a nitrogen atom is present in the monomer components for forming the second polymer, when the polarity of the first polymer layer is low, the penetration of the above-mentioned monomer components into the first polymer layer is suppressed as a result of a difference in polarity between the first polymer layer and the monomer components. In view of the foregoing, the addition of a monomer having a small molecular weight and low polarity (e.g., non-polar) facilitates the entry of the monomer components into the network of the first polymer. As a result, an interpenetrating polymer network (IPN) structure is suitably formed between the first polymer layer and the second polymer layer, and hence a multilayer membrane excellent in interlayer adhesion can be obtained.

In the case where the monomer components for forming the second polymer do not include the siloxane monomer containing a nitrogen atom, even when the second polymer does not include the constituent unit derived from the monofunctional monomer, which has a low molecular weight and is free of a nitrogen atom, a multilayer membrane excellent in interlayer adhesion between the first polymer layer and the second polymer layer can be obtained. Such effect probably results from the fact that the first polymer layer and the second polymer layer have high affinity.

Any appropriate monofunctional monomer, which has a molecular weight of 500 or less and is free of a nitrogen atom, may be used as the above-mentioned monofunctional monomer. The molecular weight of the monofunctional monomer may be, for example, 400 or less, or 300 or less, and may be, for example, 80 or more. A siloxane monomer or a hydrophobic monomer may be used as such monofunctional monomer because of its excellent affinity with the first polymer layer. Examples of the siloxane monomer include such siloxane-containing alkyl (meth)acrylates, siloxane-containing styrene derivatives, and siloxane-containing fumaric acid diesters as described above. The hydrophobic monomer is, for example, an alkyl (meth)acrylate having an alkyl group having 1 to 4 carbon atoms, preferably 1 or 2 carbon atoms. The alkyl group of the alkyl (meth)acrylate may be linear or branched, and may contain a halogen (e.g., fluorine). Of those, methyl (meth)acrylate, ethyl (meth)acrylate, tris(trimethylsiloxy)ethyl (meth)acrylate, and the like are preferred examples. The monofunctional monomers may be used alone or in combination thereof.

The content ratio of the above-mentioned monofunctional monomer in the monomer components is, for example, 4 wt% or more, preferably 5 wt% or more, more preferably 10 wt% or more. In addition, the content ratio is, for example, 90 wt% or less, preferably 70 wt% or less, more preferably 50 wt% or less, and may be, for example, 30 wt% or less, or for example, 20 wt% or less. Such content ratio can suitably provide an improving effect on adhesion to the first polymer layer.

The second polymer layer may further include any appropriate additive as required. An additive that has heretofore been used in ophthalmic device applications may be used as the additive. Examples thereof include a cooling agent, a thickener, a surfactant, a non-polymerizable dye, and a non-polymerizable UV absorber.

The blending amount of the additive in the second polymer layer may be set to, for example, from 0.01 part by weight to 5 parts by weight, preferably from 0.01 part by weight to 3 parts by weight with respect to 100 parts by weight of the second polymer.

Details of the polymerizable composition and a polymerization method therefor are described in detail in Section C.

### <Third Polymer Layer>

The third polymer layer includes a third polymer including a constituent unit derived from a siloxane monomer. The third polymer layer is substantially formed of the third polymer. Specifically, the content ratio of the third polymer in the third polymer layer in a state saturated with water is typically more than 90 wt%, for example, 95 wt% or more, and may be 97 wt% or more, or 98 wt% or more, and is, for example, 99.95 wt% or less, and may be 99.9 wt% or less.

When the third polymer layer is arranged in direct contact with at least part of the surface of the second polymer layer (e.g., in the case of the configuration illustrated in each of FIGS. **2**), description similar to that for the first polymer layer may be applied to the third polymer layer. Although description similar to that for the first polymer for forming the first polymer layer may be applied to the third polymer for forming the third polymer layer, the kinds and/or content ratios of its constituent units may be different from those of the first polymer.

Specifically, the characteristics of the third polymer layer in the above-mentioned configuration are as described below.

The water absorption of the third polymer layer is typically less than 10 wt%, for example, 3 wt% or less, preferably 2 wt% or less, more preferably 1 wt% or less, still more preferably 0.5 wt% or less. The lower limit of the water absorption is not particularly limited, and the water absorption may be, for example, 0.1 wt% or less.

The oxygen permeability coefficient of the third polymer layer is, for example, 50 Barrer or more, preferably 100 Barrer or more, more preferably 150 Barrer or more. The upper limit of the oxygen permeability coefficient is not particularly limited, but may be, for example, 600 Barrer or less.

The Rockwell superficial hardness of the third polymer layer is, for example, 20 or more, preferably 30 or more, more preferably 40 or more. The upper limit of the Rockwell superficial hardness is not particularly limited, but may be, for example, 150 or less.

The tensile modulus of elasticity of the third polymer layer is, for example, 50 MPa or more, preferably 100 MPa or more, more preferably 200 MPa or more. The upper limit of the tensile modulus of elasticity is not particularly limited, but may be, for example, 3,000 MPa or less, or for example, 2,000 MPa or less.

The total light transmittance of the third polymer layer is, for example, 80% or more, preferably 90% or more, more preferably 95% or more.

The contact angle of the surface of the third polymer layer opposite to a side in contact with the second polymer layer is, for example, 90° or less, preferably 70° or less, more preferably from 0° to 50°. The surface of the third polymer layer opposite to the side in contact with the second polymer layer may be subjected to surface modification treatment, such as corona treatment or plasma treatment.

The dynamic friction coefficient of the surface of the third polymer layer is, for example, from 0.1 to 2.0, or for example, from 0.2 to 1.5.

Alternatively, when the third polymer layer is arranged in direct contact with at least part of the surface of the first polymer layer, description similar to that for the second polymer layer may be applied to the third polymer layer. Although description similar to that for the second polymer for forming the second polymer layer may be applied to the third polymer for forming the third polymer layer, the kinds and/or content ratios of its constituent units may be different from those of the second polymer (however, it is preferred that the third polymer be free of a constituent unit derived from a siloxane monomer containing a nitrogen atom, or include the constituent unit derived from the siloxane monomer containing a nitrogen atom, and further include 4 wt% or more of a constituent unit derived from a monofunctional monomer, which has a molecular weight of 500 or less and is free of a nitrogen atom).

Specifically, the characteristics of the third polymer layer in the above-mentioned configuration are as described below.

The water absorption of the third polymer layer is, for example, less than 10 wt%, preferably 5 wt% or less, more preferably 3 wt% or less, still more preferably 2 wt% or less. The lower limit of the water absorption is not particularly limited, and the water absorption may be, for example, 0.1 wt% or less.

The oxygen permeability coefficient of the third polymer layer is, for example, 200 Barrer or more, preferably 300 Barrer or more, more preferably 400 Barrer or more. The upper limit of the oxygen permeability coefficient is not particularly limited, but may be, for example, 1,000 Barrer or less. A difference between the oxygen permeability coefficient of the first polymer layer and the oxygen permeability coefficient of the third polymer layer (Dk value of third polymer layer-Dk value of first polymer layer) is, for example, 40 Barrer or more, and may be from 50 Barrer to 1,000 Barrer.

The tensile modulus of elasticity of the third polymer layer is, for example, 1,000 MPa or less, preferably 500 MPa or less, more preferably 400 MPa or less. The lower limit of the tensile modulus of elasticity is not particularly limited, but may be, for example, 0.05 MPa or more, or for example, 0.1 MPa or more.

The total light transmittance of the third polymer layer is, for example, 80% or more, preferably 90% or more, more preferably 95% or more.

The contact angle of the surface of the third polymer layer opposite to the side in contact with the first polymer layer is, for example, from 60° to 130°, preferably from 70° to 120°, more preferably from 80° to 110°.

The dynamic friction coefficient of the surface of the third polymer layer is, for example, from 0.2 to 20, or for example, from 1.0 to 15.

### B. Application of Multilayer Membrane

The multilayer membrane according to the embodiment of the present invention may be used as an ophthalmic device, such as an ophthalmic lens or an intraocular lens. Examples of the ophthalmic lens include a contact lens including an orthokeratology lens, an artificial cornea, and a corneal onlay. The ophthalmic lens may be a hybrid lens including a hard contact lens layer and a soft contact lens layer.

In one embodiment, the multilayer membrane is a contact lens having a two-layer structure. As illustrated in each of FIGS. **1**, the multilayer membrane (contact lens having a two-layer structure) **100A** may have a configuration in which a side (back side) in contact with a cornea is the second polymer layer **20** that is a soft contact lens layer, and the opposite side (front side) thereof is the first polymer layer **10** that is a hard contact lens layer. Alternatively, the contact lens having a two-layer structure may have a configuration in which the side in contact with the cornea is the first polymer layer that is a hard contact lens layer, and the opposite side thereof is the second polymer layer that is a soft contact lens layer. The contact lens having a two-layer structure preferably has the configuration illustrated in each of FIGS. **1**.

In another embodiment, the multilayer membrane is a contact lens having a three-layer structure. As illustrated in each of FIGS. **2**, the multilayer membrane (contact lens having a three-layer structure) **100B** may have the configuration [third polymer layer (hard contact lens layer) **30**/second polymer layer (soft contact lens layer) **20**/first polymer layer (hard contact lens layer) **10**] from a side in contact with a cornea toward the opposite side thereof. Alternatively, the contact lens having a three-layer structure may have the configuration [second polymer layer (soft contact lens layer)/first polymer layer (hard contact lens layer)/third polymer layer (soft contact lens layer)]. The contact lens having a three-layer structure preferably has the configuration illustrated in each of FIGS. **2****.**

The ophthalmic device of the present invention may further include a functional element. The functional element may be partially or completely encapsulated (embedded) in the ophthalmic device, or may be held in a state of engaging with its surface. In one embodiment, the functional element is completely encapsulated in the ophthalmic device. In this case, from the viewpoint of interlayer adhesion, it is preferred that the functional element be encapsulated in any one layer rather than existing across layers. The second polymer layer has extremely high oxygen permeability and is excellent in flexibility, and hence it is more preferred that the functional element be encapsulated in the second polymer layer.

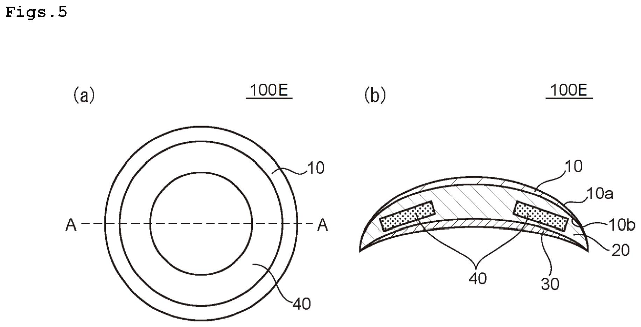

FIG. **4(a)** is a schematic plan view of a multilayer membrane encapsulating a functional element in one embodiment of the present invention, and FIG. **4(b)** is a schematic cross-sectional view taken along the line A-A thereof. FIG. **5(a)** is a schematic plan view of a multilayer membrane encapsulating a functional element in another embodiment of the present invention, and FIG. **5(b)** is a schematic cross-sectional view taken along the line A-A thereof.

A multilayer membrane **100D** illustrated in each of FIGS. **4** includes: the first polymer layer **10** having a substantially circular shape in plan view, and having the front-side surface **10a** and the back-side surface **10b**; the second polymer layer **20** arranged in direct contact with the back-side surface **10b** of the first polymer layer **10**; and a functional element **40**, which has a circular shape in plan view and is encapsulated in the second polymer layer **20**. A multilayer membrane **100E** illustrated in each of FIGS. **5** includes: the first polymer layer **10** having the front-side surface **10a** and the back-side surface **10b**; the second polymer layer **20** arranged in direct contact with the back-side surface **10b** of the first polymer layer **10**; the third polymer layer **30** arranged in direct contact with the back-side surface of the second polymer layer **20**; and the functional element **40**, which has a circular shape in plan view and is encapsulated in the second polymer layer **20**.

The functional element **40** may be appropriately selected in accordance with applications. Specific examples of the functional element include: a sensor capable of acquiring or monitoring biological information; and an optical element capable of displaying an image.

### C. Method of producing Multilayer Membrane

The multilayer membrane according to the embodiment of the present invention may be produced by any appropriate method. For example, the multilayer membrane may be produced by a production method including: polymerizing a polymerizable composition for forming the first polymer layer in a mold to provide the first polymer layer; polymerizing a polymerizable composition for forming the second polymer layer to provide the second polymer layer; and optionally polymerizing a polymerizable composition for forming the third polymer layer to provide the third polymer layer.

For example, in an embodiment in which the monomer components for forming the second polymer include a siloxane monomer containing a nitrogen atom, the method of producing a multilayer membrane preferably includes polymerizing the polymerizable composition for forming the first polymer layer to provide the first polymer layer, arranging the polymerizable composition for forming the second polymer layer so that the composition may be in direct contact with at least part of the first polymer layer thus obtained, and polymerizing the composition to provide the second polymer layer. In the above-mentioned production method, when the multilayer membrane includes the third polymer layer including the third polymer having characteristics similar to those of the first polymer, the second polymer layer may be produced by producing the first polymer layer and the third polymer layer, and then arranging and polymerizing the polymerizable composition for forming the second polymer layer so that the composition may be in direct contact with at least part of the first polymer layer and the third polymer layer. In addition, when the multilayer membrane includes the third polymer layer including the third polymer having characteristics similar to those of the second polymer (e.g., when monomer components for forming the third polymer include a siloxane monomer containing a nitrogen atom), the second polymer layer and the third polymer layer may be produced by producing the first polymer layer, and then arranging and polymerizing the polymerizable composition for forming the second polymer layer and the polymerizable composition for forming the third polymer layer so that the compositions may be in direct contact with at least part of the first polymer layer. When the first polymer layer is produced, and then the polymerizable composition for forming the second polymer layer is arranged and polymerized so as to be in direct contact with at least part of the first polymer layer, to thereby produce the second polymer layer, a multilayer membrane excellent in interlayer adhesion between the first polymer layer and the second polymer layer can be suitably obtained.

Each of the polymerizable compositions for forming the first polymer layer, the second polymer layer, and the third polymer layer may include a polymerization initiator and a solvent in addition to the monomer components and the additive described above.

The polymerization initiator is appropriately selected in accordance with a polymerization method. As a thermal polymerization initiator to be used in polymerization through heating, there are given, for example, 2,2'-azobisisobutyronitrile, 2,2'-azobis(2,4-dimethylvaleronitrile), benzoyl peroxide, t-butyl hydroperoxide, cumene hydroperoxide, lauroyl peroxide, t-butyl peroxyhexanoate, and 3,5,5-trimethylhexanoyl peroxide. Those thermal polymerization initiators may be used alone or as a mixture thereof.

The blending ratio of the thermal polymerization initiator in the polymerizable composition is preferably from 0.001 wt% to 3 wt%, more preferably from 0.01 wt% to 2 wt% with respect to all components in the polymerizable composition (excluding the organic solvent).

As a photopolymerization initiator to be used in polymerization through photoirradiation, there are given, for example: phosphine oxide-based photopolymerization initiators, such as 2,4,6-trimethylbenzoyl-diphenylphosphine oxide (TPO) and bis(2,4,6-trimethylbenzoyl)-phenylphosphine oxide; benzoin-based photopolymerization initiators, such as methyl o-benzoylbenzoate, methyl benzoylformate, benzoin methyl ether, benzoin ethyl ether, benzoin isopropyl ether, benzoin isobutyl ether, and benzoin-n-butyl ether; phenone-based photopolymerization initiators, such as 2-hydroxy-2-methyl-1-phenylpropan-1-one (HMPPO), p-isopropyl-α-hydroxyisobutylphenone, p-t-butyltrichloroacetophenone, 2,2-dimethoxy-2-phenylacetophenone, α,α-dichloro-4-phenoxyacetophenone, and N,N-tetraethyl-4,4-diaminobenzophenone; 1-hydroxycyclohexyl phenyl ketone; 1-phenyl-1,2-propanedione-2-(o-ethoxycarbonyl)oxime; thioxanthone-based photopolymerization initiators, such as 2-chlorothioxanthone and 2-methylthioxanthone; dibenzosuberone; 2-ethylanthraquinone; benzophenone acrylate; benzophenone; and benzil. Those photopolymerization initiators may be used alone or as a mixture thereof. In addition, a photosensitizer may be used together with the photopolymerization initiator.

The blending ratio of each of the photopolymerization initiator and the photosensitizer in the polymerizable composition is preferably from 0.001 wt% to 2 wt%, more preferably from 0.01 wt% to 1 wt% with respect to all components in the polymerizable composition (excluding the organic solvent).

The organic solvent may be a water-soluble organic solvent having high polarity, or may be a water-insoluble organic solvent having low polarity. As the water-soluble organic solvent, for example, an alcohol having 1 to 4 carbon atoms, acetone, methyl ethyl ketone, dimethylformamide, dimethyl sulfoxide, acetonitrile, N-methyl-2-pyrrolidone, dimethoxyethane, tetrahydrofuran, or 1,4-dioxane may be used. When the water-soluble organic solvent is used, the water-soluble organic solvent can be easily removed from the polymer material through immersion in water.

As the water-insoluble organic solvent, for example, hexane, cyclohexane, heptane, octane, dimethyl ether, diethyl ether, benzene, toluene, xylene, ethyl acetate, propyl acetate, butyl acetate, dichloromethane, chloroform, carbon tetrachloride, or an alcohol having 6 or more carbon atoms may be used. When the water-insoluble organic solvent is added to the polymerizable composition, the kinematic viscosity of the polymerizable composition is reduced to a higher extent than in the case of using the water-soluble organic solvent, and hence the handling of the polymerizable composition can be facilitated.

The content ratio of the organic solvent in the polymerizable composition may be, for example, 50 wt% or less, preferably 40 parts by weight or less, more preferably 30 parts by weight or less. In one embodiment, the content ratio of the organic solvent in the polymerizable composition is, for example, 10 wt% or less, preferably 5 wt% or less, more preferably 3 wt% or less, and may be 0 wt%. When the composition is polymerized under an environment with a small content of the organic solvent or in the absence of the organic solvent, the ratio of the monomer components in a unit volume is large, and chain transfer to the organic solvent is suppressed. Thus, there can be obtained a polymer superior in strength or toughness to a polymer obtained in the case where the composition is polymerized under an environment with a large content ratio of the organic solvent.

Photopolymerization, thermal polymerization, and a combination thereof may each be applied as the polymerization method.

When the polymerizable composition is polymerized by photopolymerization, the polymerizable composition is loaded into a mold, and then the mold is irradiated with light (e.g., UV light). A material for the mold to be used in the photopolymerization is not particularly limited as long as the material can transmit light required for the polymerization.

The wavelength of the light with which the polymerizable composition in the mold is irradiated is appropriately set in accordance with the kind of the photopolymerization initiator to be used and the like. The light illuminance and irradiation time of the light are appropriately set in accordance with the composition of the polymerizable composition and the like. The light may be applied from only one side of the mold, or may be applied from both the sides thereof. In addition, the light may be applied in one step, or may be applied in a plurality of steps. The light illuminance is preferably from 0.1 mW/cm² to 300 mW/cm² or less. The irradiation time is preferably 1 minute or more. Light beams having different illuminances may be applied stepwise. The temperature at which the light is irradiated, for example, from 10°C to 80°C, preferably from 15°C to 60°C.

When the polymerizable composition is polymerized by thermal polymerization, the polymerizable composition is loaded into a mold, and then the mold is gradually heated.

A heating temperature and a heating time in the heating of the polymerizable composition in the mold are appropriately set in accordance with, for example, the composition of the polymerizable composition. The heating temperature is preferably 50°C or more and 150°C or less, more preferably 60°C or more and 140°C or less. In addition, the heating time is preferably 10 minutes or more and 180 minutes or less, more preferably 20 minutes or more and 60 minutes or less.

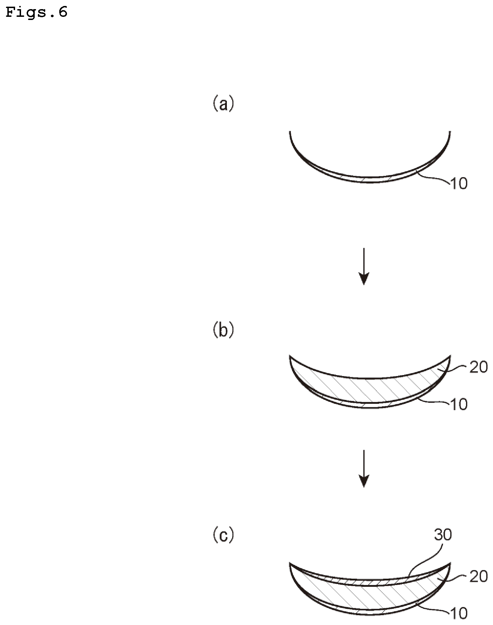

FIGS. **6** are each a schematic view for describing an example of a method of producing the multilayer membrane. First, the polymerizable composition for forming the first polymer layer is injected into a first mold having a cavity corresponding to the shape of the first polymer layer, and is polymerized to provide the first polymer layer **10** (FIG. **6(a)**). Next, a second mold having a cavity corresponding to the shape of a laminate of the first polymer layer and the second polymer layer is prepared, and the first polymer layer is arranged at a predetermined position in the cavity. Before the arrangement in the second mold, as required, modification treatment may be performed on the surface of the first polymer layer on a side where the second polymer layer is arranged. Next, the polymerizable composition for forming the second polymer layer is injected into the second mold, and is polymerized (FIG. **6(b)**). Thus, a multilayer membrane having a two-layer structure of the first polymer layer **10** and the second polymer layer **20** is obtained. Further, when the third polymer layer is formed, a third mold having a cavity corresponding to the shape of a laminate of the first polymer layer, the second polymer layer, and the third polymer layer is prepared, and the laminate of the first polymer layer and the second polymer layer is arranged at a predetermined position in the cavity. Before the arrangement in the third mold, as required, modification treatment may be performed on the surface of the first polymer layer on a side where the third polymer layer is arranged. Next, the polymerizable composition for forming the third polymer layer is injected into the third mold, and is polymerized (FIG. **6(c)**). Thus, a multilayer membrane having a three-layer structure of the first polymer layer **10,** the second polymer layer **20,** and the third polymer layer **30** is obtained.

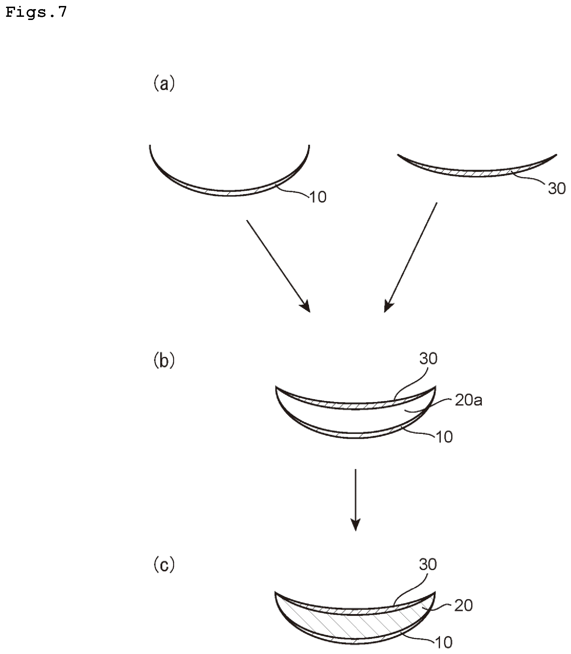

FIGS. **7** are each a schematic view for describing another example of the method of producing the multilayer membrane. In the production method illustrated in each of FIGS. **7****,** the polymerizable composition for forming the first polymer layer is injected into the first mold having a cavity corresponding to the shape of the first polymer layer, and is polymerized to provide the first polymer layer **10,** and the polymerizable composition for forming the third polymer layer is injected into a fourth mold having a cavity corresponding to the shape of the third polymer layer, and is polymerized to provide the third polymer layer **30** (FIG. **7(a)**). Next, a fifth mold having a cavity corresponding to the shape of a laminate of the first polymer layer, the second polymer layer, and the third polymer layer is prepared, and the first polymer layer **10** and the third polymer layer **30** are arranged at predetermined positions in the cavity. Thus, a cavity **20a** corresponding to the shape of the second polymer layer is formed (FIG. **7(b)**). Before the arrangement in the fifth mold, as required, modification treatment may be performed on the surface of the first polymer layer on a side where the second polymer layer is arranged and/or the surface of the third polymer layer on a side where the second polymer layer is arranged. Next, the polymerizable composition for forming the second polymer layer is injected into the cavity **20a**, and is polymerized (FIG. **7(c)**). Thus, a multilayer membrane having a three-layer structure of the first polymer layer **10**, the second polymer layer **20**, and the third polymer layer **30** is obtained.

A residue, such as an unreacted monomer component or a solvent, may be eluted as required by immersing the resultant multilayer membrane in water, an organic solvent, or a mixed liquid thereof. The elution treatment of the residue may be repeatedly performed.

### Examples

The present invention is specifically described below by way of Examples. However, the present invention is by no means limited to these Examples. The terms "part(s)" and "%" in Examples and Comparative Examples are by weight unless otherwise stated.

### [Components Used]

The meanings of abbreviations for components to be used in Examples and Comparative Examples are shown below.
(1) Siloxane Monomer
   ·SiSt: Tris(trimethylsiloxy)silylstyrene
   ·AA-PDMS: One-end acrylamide polydimethylsiloxane
   ·TRIS: Tris(trimethylsiloxy)ethyl methacrylate
   ·X-22-164 series: Dual-end type methacrylic modified polydimethylsiloxane manufactured by Shin-Etsu Chemical Co., Ltd. (functional group equivalent: from 450 g/mol to 3,900 g/mol)
   ·MAUS: Urethane-containing polydimethylsiloxane diacrylate ("n" is from approximately 30 to approximately 50 in the following structural formula)
   ·Urethane-containing siloxane monomer: A macromonomer in which a=3 to 10, b=5 to 20, and n=30 to 50 in the following structural formula 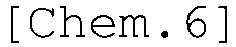 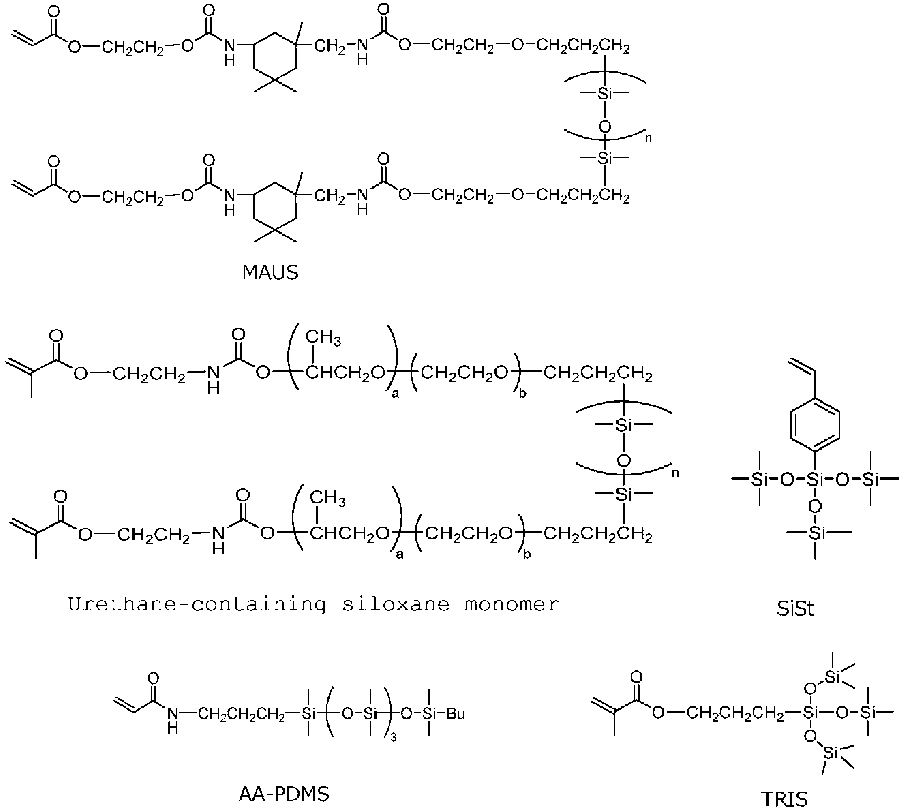
(2) Hydrophobic Monomer
   ·3FE: 2,2,2-Trifluoroethyl methacrylate
   ·6FP: Hexafluoroisopropyl methacrylate
   ·MMA: Methyl methacrylate
(3) Hydrophilic Monomer
   ·MAA: Methacrylic acid
   ·N-VP: N-vinyl-2-pyrrolidone
(4) Crosslinkable Monomer
   ·EDMA: Ethylene glycol dimethacrylate
(5) Additive
   (5-1) UV Polymerization Initiator
   ·Irg819: Bis(2,4,6-trimethylbenzoyl)phenylphosphine oxide
   ·HMPPO: 2-Hydroxy-2-methyl-1-phenylpropan-1-one
   ·TPO-L: 2,4,6-Trimethylbenzoyl-di-phenylphosphine oxide
(5-2) Non-polymerizable UV Absorber
   ·S-703: 2-(5-Chloro-2H-benzotriazol-2-yl)-6-(1,1-dimethylethyl)-4-methylphenol

### [Example 1A]

Such a multilayer membrane including a first polymer layer and a second polymer layer arranged in direct contact with the back-side surface thereof as illustrated in each of FIGS. **1** was produced. A Specific production method is as described below.

The respective components were mixed so as to have the composition of First Polymer 1-A shown in Table 1 to prepare a polymerizable composition for forming a first polymer layer. The resultant polymerizable composition was injected into a first mold made of nylon and polypropylene, the mold having a cavity corresponding to the shape of the first polymer layer. Then, under room temperature, UV light (having an illuminance of 0.6 mW/cm² at 405 nm) was applied to the first mold from the front side thereof for 30 minutes to perform photopolymerization. Thus, the first polymer layer (maximum thickness: 0.2 mm) was obtained.

Only a mold on one side of the first mold was removed, and a nylon-made mold for forming a cavity corresponding to the shape of the second polymer layer was attached instead to prepare a second mold.

The respective components were mixed so as to have the composition of Second Polymer 2-A shown in Table 2 to prepare a polymerizable composition for forming the second polymer layer. The polymerizable composition for forming the second polymer layer was injected into the cavity corresponding to the shape of the second polymer layer in the second mold. Under room temperature, UV light (having an illuminance of 0.6 mW/cm² at 405 nm) was applied to the second mold from the back side thereof for 60 minutes. Thus, the second polymer layer (maximum thickness: 0.3 mm) was formed. After the polymerization, a contact lens-shaped multilayer membrane (maximum thickness: 0.5 mm) was removed from the mold.

### [Examples 1B to 12E, Comparative Examples 1A to 9E, and Reference Examples 1A to 4E]

Multilayer membranes were each produced in the same manner as in Example 1A except that: the respective components were mixed so as to have the composition of each of First Polymers 1-A to 1-E shown in Table 1, to thereby prepare a polymerizable composition for forming a first polymer layer; the respective components were mixed so as to have the composition of each of Second Polymers 2-A to 2-U shown in Table 2 and Table 3, to thereby prepare a polymerizable composition for forming a second polymer layer; and the compositions were polymerized so that the combination of the first polymer layer and the second polymer layer was as shown in Table 4. However, in the case of a composition in which only HMPPO was used as an initiator, the composition was photopolymerized by being irradiated with UV light (having an illuminance of 6 mW/cm² at 365 nm) for 30 minutes, and in the case of a composition whose initiator was TPO-L, the composition was photopolymerized by being irradiated with UV light (having an illuminance of 1.2 mW/cm² at 405 nm) for 30 minutes.

**Table 1**

| Component | | First Polymer | | | | |
|---|---|---|---|---|---|---|
| Name | Molecular weight | 1-A | 1-B | 1-C | 1-D | 1-E |
| SiSt | 398.79 | 50 | 50 | 50 | 50 | 50 |
| TRIS | 422.82 | - | - | - | - | 33 |
| 3FE | 168.12 | 38 | - | - | - | - |
| 6FP | 236.11 | - | 38 | 38 | 38 | - |
| MAA | 86.09 | - | - | 5 | - | 10 |
| N-VP | 111.14 | - | - | - | 5 | - |
| EDMA | 198.22 | 12 | 12 | 12 | 12 | 12 |
| S-703 | 315.8 | 0.05 | - | - | - | - |
| Irg819 | 418.47 | 1 | - | - | - | - |
| HMPPO | 164.2 | - | 0.8 | 0.8 | 0.8 | 0.8 |
| Appearance | | Transparent | Transparent | Transparent | Transparent | Transparent |
| Dk | | 178 | 267 | 223 | 199 | 179 |
| Water absorption (%) | | 0.26 | 0.14 | 0.37 | 0.27 | 0.16 |
| Contact angle (°) | Before plasma | 101 | 104 | 87 | 102 | 102 |
| | After plasma | 12 | 18 | 16 | 17 | 17 |
| Dynamic friction coefficient | | 0.57 | 0.99 | 0.88 | 0.77 | 0.72 |
| Rockwell hardness | | 40.4 | 35.9 | 50.4 | 49.8 | 27.1 |
| Visible light transmittance (%) | | 95 | 99 | - | - | 100 |

**Table 2**

| Componen t | Molecula r weight | Second Polymer | | | | | |
|---|---|---|---|---|---|---|---|
| | | 2-A | 2-B | 2-C | 2-D | 2-E | 2-F |
| SiSt | 398.79 | 50 | 50 | 50 | - | - | - |
| X-22-164E | >1,000 | - | - | - | 95 | - | - |
| X-22-164C | >1,000 | - | - | 40 | - | 95 | - |
| X-22-164B | >1,000 | - | 40 | - | - | - | 95 |
| X-22-164AS | ~900 | 40 | - | - | - | - | - |
| EDMA | 198.22 | 10 | 10 | 10 | 5 | 5 | 5 |
| S-703 | 315.8 | 0.05 | 0.05 | 0.05 | - | - | - |
| TPO-L | 316.331 | 1 | 1 | 1 | - | - | - |
| HMPPO | 164.2 | - | - | - | 1 | 1 | 1 |
| Appearance | | Transparen t | Transparen t | Transparen t | Transparen t | Transparen t | Transparen t |
| Dk* | | 221 | 356 | 374 | 684 | 646 | 311 |
| Water absorption (%) | | 0.11 | 0.12 | 0.15 | 0.07 | 0.09 | 0.07 |
| Contact angle (°) | | 96 | 94 | 99 | 90 | 99 | 75 |
| Dynamic friction coefficient | | 2.09 | 0.19 | 0.24 | 3.91 | 3.73 | 3.51 |
| Visible light transmittance (%) | | 96 | 97 | 96 | - | 100 | 100 |

**Table 3**

| Component | Molecular weight | Second Polymer | | | | | | | | | | | | | | |
|---|---|---|---|---|---|---|---|---|---|---|---|---|---|---|---|---|
| | | 2-G | 2-H | 2-I | 2-J | 2-K | 2-L | 2-M | 2-N | 2-0 | 2-P | 2-Q | 2-R | 2-S | 2-T | 2-U |
| MAUS* | >1,000 | 95 | - | - | - | - | - | - | - | - | - | - | - | - | - | - |
| Urethane-containing siloxane monomer* | >1,000 | - | 95 | - | - | - | - | - | 94 | 94 | 75 | 90 | 90 | 91 | 92 | 93 |
| X-22-164B | >1,000 | - | - | 80 | 92 | 80 | 96 | 92 | - | - | - | - | - | - | - | - |
| AA-PDMS* | 524.04 | - | - | 15 | 3 | - | - | - | - | - | 20 | - | - | - | - | - |
| TRIS | 422.82 | - | - | - | - | 15 | 1 | 5 | 1 | - | - | 5 | - | - | - | - |
| MMA | 100.12 | - | - | - | - | - | - | - | - | 1 | - | - | 5 | 4 | 3 | 2 |
| EDMA | 198.22 | 5 | 5 | 5 | 5 | 5 | 3 | 3 | 5 | 5 | 5 | 5 | 5 | 5 | 5 | 5 |
| HMPPO | 164.2 | 1 | 1 | 1 | 1 | 1 | 1 | 1 | 1 | 1 | 1 | 1 | 1 | 1 | 1 | 1 |
| Appearance | | Transp arent | Transp arent | Transp arent | Transp arent | Transp arent | Transp arent | Transp arent | Transp arent | Transp arent | Transp arent | Transp arent | Transp arent | Transp arent | Transp arent | Transp arent |
| Dk | | 534 | 435 | 353 | 599 | 533 | 625 | 639 | 454 | 450 | 422 | 443 | 408 | 422 | 434 | 410 |
| Water absorption (%) | | 0.56 | 0.9 | 0.36 | 0.13 | 0.04 | 0.01 | 0.01 | 1.28 | 1.58 | 1.34 | 1.15 | 1.09 | 1.22 | 1.17 | 1.11 |
| Contact angle (°) | | 70 | 81 | 103 | 95 | 106 | 104 | 101 | 110 | 109 | 110 | 111 | 110 | 110 | 109 | 113 |
| Dynamic friction coefficient | | 3.30 | 7.09 | 2.16 | 3.42 | 3.64 | 4.34 | 8.18 | 4.35 | 3.68 | 4.43 | 5.25 | 3.99 | 10.22 | 10.50 | 4.26 |
| Visible light transmittance (%) | | 99 | 98 | 99 | 99 | 99 | 99 | 99 | 99 | 99 | 99 | 99 | 98 | 98 | 99 | 99 |

| | | | | | | | | | | | | | | | | |
|---|---|---|---|---|---|---|---|---|---|---|---|---|---|---|---|---|
| "*" indicates a nitrogen atom-containing siloxane monomer. | | | | | | | | | | | | | | | | |

The respective physical properties of the single polymers shown in Tables 1 to 3 were measured by using a polymer produced in the form of a plate or blanks, or a polymerizable composition thereof as a measurement sample. A method of producing the plate or the blanks and measurement methods are as described below.

### <Production of Plate or Blanks>

The respective components were mixed so as to have the composition of each of Polymers 1-A to 1-E and 2-A to 2-U shown in Table 1 to Table 3, to thereby prepare a polymerizable composition. The resultant polymerizable composition was injected into a cavity having a plate shape with a thickness of 0.2 mm or 2 mm, or a blanks shape with a thickness of 8 mm. Under room temperature, one surface of the composition was irradiated with UV light (having an illuminance of about 0.6 mW/cm² at 405 nm) for 60 minutes. However, in the case of a composition in which only HMPPO was used as an initiator, the composition was photopolymerized by being irradiated with UV light (having an illuminance of 6 mW/cm² at 365 nm) for 30 minutes, and in the case of a composition whose initiator was TPO-L, the composition was photopolymerized by being irradiated with UV light (having an illuminance of 1.2 mW/cm² at 405 nm) for 30 minutes. After the polymerization, the plate was, or the blanks were, removed from the mold, and the plate was used as it was, and the blanks were used after having been cut to a desired thickness and polished.

### <Water Absorption>

A plate having a thickness of 2 mm was used as a measurement sample. The measurement sample was dried in a dryer at 50°C for 3 hours or more, and then its weight W1 (g) after the dried measurement sample had been brought to constant weight was measured. After that, the measurement sample was immersed in distilled water, and was left to stand still overnight at 25°C. Water on the surface of the measurement sample was wiped off, and the weight W2 (g) thereof after the measurement sample had been brought to constant weight again was measured. The water absorption thereof was calculated in accordance with the following equation. $Water absorption \left(%\right) = \left(W2-W1\right) / W 1 \times 100$

### <Rockwell Superficial Hardness>

Blanks having a thickness of 4 mm were used as a measurement sample. The Rockwell superficial hardness of the measurement sample was measured at 23°C and 50%RH with a Rockwell hardness tester "FR-X3" manufactured by Future-Tech Corp.

### <Measurement of Oxygen Permeability Coefficient (Dk Value)>

A plate having a thickness of 0.2 mm was used as a measurement sample. A similar plate sample was produced as a reference standard by using a material for "Menicon Z" (manufactured by Menicon Co., Ltd.), and its Dk reference value was set to 163. The gas permeation amount (DP) of the measurement sample was measured with a GTG analyzer (manufactured by REHDER DEVELOPMENT COMPANY), whose temperature was controlled at 35°C, by flowing oxygen through the measurement sample at a predetermined pressure for a predetermined time period. The foregoing was similarly performed on the reference standard. The oxygen permeability coefficient of each measurement sample was calculated in accordance with the following equation. $Dk value = L \times DP \times 1.66 \times {10}^{- 5} / \left(C\times t\times A\times \left(UP\times 7.5-VP-DP\right)\right)$
L: Sample thickness (cm)
DP: DOWNSTREAM PRESSURE (mmHg)
C: (Pressure/volume) constant (mmHg/µL)
t: Set test time (min.)
A: Area of test sample (cm²)
UP: UPSTREAM PRESSURE (mmHg)
VP: VALVE PULSE value (mmHg)

The Dk value obtained by the equation was normalized by the following equation. 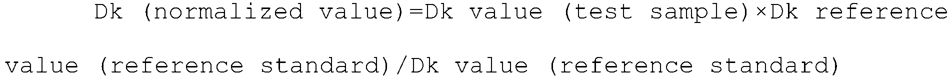 Dk (normalized value)=Dk value (test sample)×Dk reference value (reference standard)/Dk value (reference standard)

### <Contact Angle>

A 0.2-millimeter thick plate subjected to plasma treatment was used as a measurement sample. The contact angle of the plasma-treated surface was measured by a sessile drop method with a contact angle meter (DropMaster 500 manufactured by Kyowa Interface Science Co., Ltd.). Physiological saline was used as a contact liquid, its droplet amount was set to 2 µL, and a θ/2 method was adopted for the analysis of the contact angle. The plasma treatment was performed under the conditions of an output of 50 W and 100 Pa under an oxygen gas atmosphere.

### <Dynamic Friction Coefficient>

A plate having a thickness of 0.2 mm was produced for each polymerizable composition and used as a measurement sample. The dynamic friction coefficient of the sample was measured in the air with a nanotribometer (NTR3 manufactured by Anton Paar GmbH) . The measurement was performed by using a sapphire ball having a diameter of 3 mm as a counterpart material under the condition of a load of 1 mN.

### <Appearance>

A plate having a thickness of 0.2 mm was used as a measurement sample. The appearance of each measurement sample was visually evaluated, and was evaluated on the basis of the following evaluation criteria.
Transparent: No turbidity is observed.
Cloudy: Turbidity is observed.

### <Visible Light Transmittance>

A light transmittance at a wavelength of from 210 nm to 780 nm was measured by using the polymerizable composition for forming each polymer as a measurement sample.

### <Adhesion Evaluation>

Each of the multilayer membranes obtained in Examples, Comparative Examples, and Reference Examples was cut in its thickness direction, and adhesion between its first polymer layer and second polymer layer was evaluated on the basis of the following evaluation criteria. The results are shown in Table 4.
∘ (Satisfactory): No lifting or peeling of an interface between the layers is observed when the multilayer membrane is cut.
× (Unsatisfactory): Lifting or peeling of the interface is observed when the multilayer membrane is cut.

**Table 4**

| | | Examples 1A to 1E | Examples 2A to 2E | Examples 3A to 3E | Examples 4A to 4E | Examples 5A to 5E | Examples 6A to 6E | | |
|---|---|---|---|---|---|---|---|---|---|
| Second polymer layer | | 2-A | 2-B | 2-C | 2-D | 2-E | 2-F | | |
| First polymer layer | 1-A | ○ | ○ | ○ | ○ | ○ | ○ | | |
| | 1-B | ○ | ○ | ○ | ○ | ○ | ○ | | |
| | 1-C | ○ | ○ | ○ | ○ | ○ | ○ | | |
| | 1-D | ○ | ○ | ○ | ○ | ○ | ○ | | |
| | 1-E | ○ | ○ | ○ | ○ | ○ | ○ | | |

| | | Comparative Examples 1A to 1E | Comparative Examples 2A to 2E | Comparative Examples 3A to 3E | Comparative Examples 4A to 4E | Examples 7A to 7E | Examples 8A to 8E | Examples 9A to 9E | |
|---|---|---|---|---|---|---|---|---|---|
| Second polymer layer | | 2-G | 2-H | 2-I | 2-J | 2-K | 2-L | 2-M | |
| First polymer layer | 1-A | × | × | × | × | ○ | ○ | ○ | |
| | 1-B | × | × | × | × | ○ | ○ | ○ | |
| | 1-C | × | × | × | × | ○ | ○ | ○ | |
| | 1-D | × | × | × | × | ○ | ○ | ○ | |
| | 1-E | × | × | × | × | ○ | ○ | ○ | |

| | | Comparative Examples 5A to 5E | Comparative Examples 6A to 6E | Comparative Examples 7A to 7E | Examples 10A to 10E | Examples 11A to 11E | Examples 12A to 12E | Comparative Examples 8A to 8E | Comparative Examples 9A to 9E |
|---|---|---|---|---|---|---|---|---|---|
| Second polymer layer | | 2-N | 2-O | 2-P | 2-Q | 2-R | 2-S | 2-T | 2-U |
| First polymer layer | 1-A | × | × | × | ○ | ○ | ○ | × | × |
| | 1-B | × | × | × | ○ | ○ | ○ | × | × |
| | 1-C | × | × | × | ○ | ○ | ○ | × | × |
| | 1-D | × | × | × | ○ | ○ | ○ | × | × |
| | 1-E | × | × | × | ○ | ○ | ○ | × | × |

| | Reference Examples 1A to 1E | Reference Examples 2A to 2E | | Reference Examples 3A to 3E | | Reference Examples 4A to 4E | | | |
|---|---|---|---|---|---|---|---|---|---|
| Second polymer layer | 1-A | 1-B | | 1-C | | 1-D | | | |
| | 1-A | ○ | | ○ | | ○ | | ○ | |
| First polymer layer | 1-B | ○ | | ○ | | ○ | | ○ | |
| | 1-C | ○ | | ○ | | ○ | | ○ | |
| | 1-D | ○ | | ○ | | ○ | | ○ | |
| | 1-E | ○ | | ○ | | ○ | | ○ | |

As can be seen from Table 4, in each of the multilayer membranes (Examples 1A-1E to Examples 9A-9E) in which the second polymer layer was formed of the polymer that was free of a constituent unit derived from a siloxane monomer containing a nitrogen atom, the adhesion between the first polymer layer and the second polymer layer was satisfactory. Meanwhile, regarding each of the multilayer membranes in which the second polymer layer was formed of the polymer including the constituent unit derived from the siloxane monomer containing a nitrogen atom, when the polymer included 4 wt% or more of a constituent unit derived from a monofunctional monomer, which had a molecular weight of 500 or less and was free of a nitrogen atom (Examples 10A-10E to 12A-12E), the adhesion between the first polymer layer and the second polymer layer was satisfactory, but when the content ratio of such constituent unit derived from the monofunctional monomer was from 0 wt% to 3 wt% (Comparative Examples 1A-1E to 9A-9E), the adhesion between the first polymer layer and the second polymer layer was unsatisfactory. The first polymers A to E showed satisfactory adhesion to each other (Reference Examples 1A-1E to 4A-4E).

Plates 1 to 8 each having a laminated structure of a first polymer layer and a second polymer layer (first polymer layer thickness:second polymer layer thickness=1:3, total thickness: 0.4 mm) were each produced as follows: by a method similar to the above-mentioned method of producing a plate, the first polymer layer was produced, and then the second polymer layer was produced so as to be in direct contact with one side thereof. The combination of polymers for forming the first polymer layer and the second polymer layer, and the Dk value measured for each of the plates 1 to 8 are shown in Table 5.

**Table 5**

| | 1 | 2 | 3 | 4 | 5 | 6 | 7 | 8 |
|---|---|---|---|---|---|---|---|---|
| First polymer layer | 1-A | 1-A | 1-A | 1-A | 1-E | 1-E | 1-E | 1-E |
| Second polymer layer | 2-B | 2-F | 2-Q | 2-S | 2-B | 2-F | 2-Q | 2-S |
| Dk | 313 | 281 | 376 | 351 | 310 | - | 377 | 372 |

Plates 9 and 10 each having a structure in which a first polymer layer, a second polymer layer, and a third polymer layer were laminated in this order (first polymer layer thickness:second polymer layer thickness:third polymer layer thickness=1:3:1, total thickness: 0.5 mm) were each produced as follows: by a method similar to the above-mentioned method of producing a plate, the first polymer layer and the third polymer layer were produced, and then the second polymer layer was produced so as to fill a gap between these layers. The combination of polymers for forming the first polymer layer to the third polymer layer, and the Dk value measured for each of the plates 9 and 10 are shown in Table 6.

**Table 6**

| | 9 | 10 |
|---|---|---|
| First polymer layer | 1-A | 1-E |
| Second polymer layer | 2-B | 2-B |
| Third polymer layer | 1-A | 1-E |
| Dk | 180 | 207 |

### Industrial Applicability

The multilayer membrane of the present invention is suitably used in ophthalmic devices, such as contact lenses, artificial corneas, corneal onlays, and intraocular lenses.

### Reference Signs List

- **10**: first polymer layer (first polymer part)
- **20**: second polymer layer (second polymer part)
- **30**: third polymer layer
- **100**: composite membrane (multilayer membrane)

## Claims

1. A composite membrane, comprising:
a first polymer part including a first polymer; and
a second polymer part, which is arranged in direct contact with at least part of the first polymer part and includes a second polymer,
wherein the first polymer and the second polymer each include a constituent unit derived from a siloxane monomer, provided that the second polymer (i) is free of a constituent unit derived from a siloxane monomer containing a nitrogen atom, or (ii) includes the constituent unit derived from the siloxane monomer containing a nitrogen atom, and
wherein in the case (ii), the second polymer includes 4 wt% or more of a constituent unit derived from a monofunctional monomer, which has a molecular weight of 500 or less and is free of a nitrogen atom.

2. The composite membrane according to claim 1,
wherein the first polymer part is a first polymer layer having a front-side surface and a back-side surface, and
wherein the second polymer part is a second polymer layer arranged in direct contact with at least part of one surface of the first polymer layer.

3. The composite membrane according to claim 2, wherein the composite membrane has a laminated structure in which two or more polymer layers are laminated.

4. The composite membrane according to claim 2, wherein the second polymer layer is arranged in direct contact with at least part of the back-side surface of the first polymer layer.

5. The composite membrane according to claim 2, further comprising a third polymer layer, which is arranged in direct contact with at least part of a surface of the second polymer layer opposite to the first polymer layer and includes a third polymer,
wherein the third polymer includes a constituent unit derived from a siloxane monomer.

6. The composite membrane according to claim 1, wherein the composite membrane has an oxygen permeability coefficient of 50 Barrer or more.

7. The composite membrane according to claim 1, wherein the composite membrane has a total light transmittance of 80% or more.

8. The composite membrane according to claim 1, wherein each of the polymer parts has a water absorption of 3 wt% or less.

9. The composite membrane according to claim 2, wherein a Rockwell superficial hardness of at least one outermost layer of the composite membrane is 20 or more.

10. The composite membrane according to claim 1, wherein the first polymer and/or the second polymer includes, as the constituent unit derived from the siloxane monomer, a constituent unit derived from a long-chain siloxane monomer having a siloxane bond with a number of repetitions of 3 or more.

11. The composite membrane according to claim 10, wherein a total number of the siloxane bonds in the long-chain siloxane monomer is 100 or less.

12. The composite membrane according to claim 10, wherein the second polymer includes the constituent unit derived from the long-chain siloxane monomer.

13. The composite membrane according to claim 1, wherein the first polymer includes the constituent unit derived from the siloxane monomer at a content ratio of 80 wt% or less.

14. The composite membrane according to claim 1, wherein the first polymer includes, as the constituent unit derived from the siloxane monomer, a constituent unit derived from a siloxane-containing styrene derivative.

15. The composite membrane according to claim 1, wherein the composite membrane is an ophthalmic device.

16. The composite membrane according to claim 1, wherein the composite membrane is an intraocular lens.

17. The composite membrane according to claim 1, wherein the composite membrane is a contact lens.

18. The composite membrane according to claim 1, wherein the composite membrane is an orthokeratology lens.

19. The composite membrane according to claim 1, wherein the composite membrane is a hybrid lens including a hard contact lens part and a soft contact lens part.

20. The composite membrane according to claim 19, wherein the first polymer part is the hard contact lens part.

21. The composite membrane according to claim 1, further comprising a functional element embedded therein.
